(19)

Europäisches
Patentamt
European
Patent Office
Office européen
des brevets

(11) **EP 3 242 239 A1**

(12) **EUROPEAN PATENT APPLICATION**

(43) Date of publication:
**08.11.2017 Bulletin 2017/45**

(21) Application number: **16167852.9**

(22) Date of filing: **02.05.2016**

(51) Int Cl.:
*G06F 21/36* (2013.01)   *G06Q 20/32* (2012.01)
*G06K 9/00* (2006.01)   *G06K 9/46* (2006.01)
*G06T 7/00* (2017.01)   *G06K 9/62* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Scantrust SA
1015 Lausanne (CH)**

(72) Inventor: **KOVAL, Oleksiy
1202 GENEVA (CH)**

(74) Representative: **reuteler & cie SA
Chemin de la Vuarpillière 29
1260 Nyon (CH)**

(54) **OPTIMIZED AUTHENTICATION OF GRAPHIC AUTHENTICATION CODE**

(57)    Method of verifying the authenticity of a graphic authentication code using a decision making component of a computer program comprising:
- extracting features from the graphic authentication code,
- receiving reference features calculated during a training process,
- performing a comparison of extracted and reference features, and based on that comparison,
- determining whether the secure graphic is authentic, wherein the decision making component is configured by
- defining a template based on a printing file of an original graphic authentication code or based on a scanned image(s) of an original printed graphic authentication code,
- providing a training set comprising a plurality of scanned images of original printed said graphic authentication codes as well as/without printed copies of graphic authentication codes, said copies belonging to a class of non-authentic graphic authentication codes and said originals belonging to a class of authentic graphic authentication codes,
- performing an alignment of images of the training set with the template,
- applying an optimization process of the template using images from the training set,
- extracting features from the optimized template that enable discrimination between the class of authentic and non-authentic graphic authentication codes of the training set, the template optimization process and feature extraction process comprising iterative operations for optimization of the template and feature extraction.

(18)

**Description**

**Field of the invention**

The present invention relates to graphic codes that may be printed, such codes enabling identification and authentication of an article. The present invention also relates to methods, systems and computer software for generation and verification of the graphic codes.

**Background**

Known graphic authentication codes include for instance Digital Authentication Codes (DAG) [1], Copy Detection Patterns (CDP) [2], Secured Information Matrices (SIM) [3], and Secured Bar Codes (SBC) [4].

Graphical authentication codes may further include other visual patterns represented by a set of dots, connected or disconnected, unprotected or protected by any of existing suitable error-correcting mechanism distributed in randomly or deterministically defined coordinates, of constant or varying density, color and shape. These codes might be protected by any of suitable error correcting mechanisms such as Low Density Parity Check (LDPC) codes, Turbo codes, Reed Solomon (RS) codes, Bose-Chaudhuri-Hochquenghem (BCH) codes, convolutional codes, multilevel codes or trellis coding modulation (TCM).

The graphic authentication code may be printed on a surface of an article using various printing techniques and strategies, including **static** printing strategy (every item is protected by a fixed graphic pattern), **serialized** printing strategy (every item is protected by a unique personalized graphic pattern) or **hybrid** printing strategy (when the code is used together with classical identification means; the two complementary elements are printed alongside or within each other in two passes of printing and possibly at different resolutions).

The need for protection of valuable goods, documents, products and brands has increased with technological developments that have provided relatively cheap means for high-resolution acquisition, reproduction and storage as well as because of the wide availability of professional software facilitating the ways of manipulating, processing and interpreting data in general, and visual data in particular. The inherent risks include the manufacturing and distribution of counterfeit goods, reuse of original packaging, illicit trade in original goods, uncontrolled distribution of goods and various other commercial activities not endorsed or accepted by the original product originator.

Many solutions exist for item authenticity protection and verification that include the use of material science (special inks or crystals) [5], coherent optics [6], physical properties of items (physical unclonable functions) [7], and watermarks [8] to name a few. However, they are not free from important shortcomings that prevent their universal application such as the use of non-cryptographic principles, high complexity of integration into a production process, overall expensive deployment, use of specific readers, a need to combine marketing and security needs in one solution that is difficult to satisfy, etc.

A printable graphic authentication code represents a low cost solution that integrates easily into manufacturing for various printing strategies (static, serialized and hybrid) and may combine the use of classical cryptographic primitives with physical layer security granted by random properties of the printing and scanning processes that together:

- form a print and scan channel;
- do not require specialized equipment for read-out;
- elegantly address both authenticity protection and marketing needs (for instance, when the graphic authentication code is combined with a 1D or 2D barcode or RFID or any other mean to store marketing-relevant data or itself contains such data).

After being printed on the surface of an item, the graphic authentication code becomes a subject of authenticity or/and quality verification.

For this purpose, the user who accomplishes the verification (that will be referred to as "customer" hereafter) may acquire an image/images of the graphic authentication code(s) using an optical image acquisition device, for instance a camera embedded in a specialized reader or in a consumer portable device such as a smartphone. The acquired data may be analyzed locally on the customer device or transferred to a remote data processing device.

At the stage of quality assessment and depending of the goal of the customer, the presence of various distortions and imperfections that include but are not limited to:

- printing instability in terms of color reproduction,
- insufficiently precise alignment of elements of the graphic authentication code and/or elements that might contain marketing-relevant information or information that assists processing of the graphic authentication code, defocusing or linear blur, geometrical transformations,

- presence of artifacts due to imperfections of the manufacturing or acquisition (such as dot gain or lens distortions as possible examples)

is determined.

Possible actions that might be taken at this stage include adjustment of printing equipment, request of acquisition repetition in specified conditions or confirmation of the acceptable quality level to name a few.

If the final goal of the customer is to perform item(s) authenticity verification, the quality-proved data are passed to the decision making stage.

Prior to the generation of the sought decision, the received image(s) of the graphic authentication code(s) should be processed and the relevant features/robust hashes should be extracted. In the case the above-mentioned degradations are identified and their parameters are estimated, the recovery of a high quality image(s) of the graphic authentication code is attempted. Features that are used for decision-making are then extracted from the recovered image(s) of the graphic authentication code. The features of the graphic authentication codes are compared to the obtained using the template(s) graphic authentication code digital image(s) that was(were) used in printing. The comparison is performed using minimum L2 (L1) distance decoding rule or cross-correlation that produces a score in terms of the corresponding distance measure or correlation coefficient between the template(s) and graphic authentication code image(s). If the score satisfies comparison constraints/decision making threshold, the item authenticity is confirmed, otherwise the item is considered a copy. Finally, the customer is informed about the final result by visualizing a corresponding message on the local verification device or a message that is transferred by a secure server.

The above described authenticity validation method that is based on the use of the graphic authentication code is however not always able to successfully resolve an authenticity validation problem that happens due to the following reasons:

(a) currently available solutions are not able to cope with strong variations in the printing process especially inherent for certain types of printing (such as HP Indigo). As a result, the variability in the class of images measured in terms of the abovementioned score that represent original graphic authentication codes appears prohibitively high for existing methods to obtain accurate and reliable separation of original graphic authentication codes and copies;

(b) theoretical models that were used to implement these solutions and to characterize theoretical performance limits attainable in printing and scanning channels either applied once (manufacturing of genuine items) or repeatedly (manufacturing of copies) are considerably oversimplified and significantly underestimate the power and freedom of the counterfeiter in creating fakes. In particular, the references [9,10] assume that the process of printing and scanning of a graphic code involves additive Gaussian noise generated identically and independently. Additionally, it is supposed that the ultimate task of successful copying (when authenticity confirmation decision is generated by the system challenged by a copy) is complicated by the need to accurately guess/recover the binary image template used in manufacturing of original items. However, the real goal of the counterfeiter/opponent is rather simpler due to existence of aforementioned distortions and imperfections inherent to both manufacturing and acquisition of the genuine graphic authentication code that consists in generation of such data that after being printed and scanned will be as close as possible to an acquisition of one of the prints of original graphic authentication code held by he/she. A possible strategy of the counterfeiter consists in application of the sensitivity attack from data hiding [11] provided that a serial access to the decision-making is available.

Another approach consists in modeling the channel as an additive one with independent and identically distributed noise that follows either Generalized Gaussian or Log-normal distributions [10, 12]. These assumptions contradict the fact that: 1) the noise component of the model is input dependent, meaning that it is rather unlikely to obtain identical printing process behavior inside a region printed with one color, on its boundary and inside a region where nothing is printed (only the substrate irregularities are observed); (2) the abovementioned availability of software means for editing and manipulating of images provides a counterfeiter with sufficient capabilities to optimize his/her strategy in generating copies that are much more powerful in compromising authenticity protection system;

(c) as it is indicated in [13], synchronization/alignment of an acquired graphic authentication code images versus a digital template is performed using various markers (such as corner points or line segments that should be localized in order to initialize the recovery process). The localization is based on corner or line detectors. However, because of ambiguity introduced by the printing/acquisition process into their coordinates and shapes, the output image will inevitably contain residual distortions that will significantly impact the computed score/generated verdict [14];

(d) non-stationary input-dependent character of channel distortions as well as a possibility to apply attacks with memory that target mimicking not the digital template but a scan of a printed original graphic authentication code justify highly suboptimal character of the cross-correlation-based decision making rule;

(e) provided that a scan of one printed original graphic authentication code is available, selection of the digital template as the reference used in decision making contradicts to the data processing inequality from information theory [15] thus impacting optimality/precision of the generated decision.

**Summary of the invention**

The object of the present invention is to provide a system and process for reliable authentication of printed graphic authentication codes, in particular that generates a low level of false positives and false negatives.

It is advantageous to provide a system and process for reliable authentication of printed graphic authentication codes, that may be applied to codes printed on various substrates whether planar or non-planar.

It is advantageous to provide a system and process for reliable authentication of printed graphic authentication codes, that may be used with graphic authentication codes printed with widespread conventional printing techniques.

It is advantageous to provide a system and process for reliable authentication of printed graphic authentication codes, that may be used with graphic authentication codes printed with widespread conventional printing techniques.

It is advantageous to provide a system and process for reliable authentication of printed graphic authentication codes, that may be easily used with two dimensional colour or black and white graphic authentication codes.

Described herein are systems and methods for reading and interpreting the data represented by or stored in the graphic authentication code in order to verify authenticity of the item protected by the graphic authentication code.

An improved system for authentication of brands and products using graphic codes contains improved synchronization or alignment of the graphic code to pre-defined coordinates, takes into account the non-stationary character of the print and scan channel, and exploits advanced feature extraction strategy.

An aspect of the invention concerns a method of configuring a decision making component of a computer program for verifying the authenticity of a graphic authentication code comprising position synchronization marks and a secure graphic, the method comprising:

- defining a template based on a printing file of an original graphic authentication code or based on a scanned image of an original printed graphic authentication code,
- providing a training set comprising a plurality of scanned images of original printed said graphic authentication codes as well as printed copies of graphic authentication codes, said copies belonging to a class of non-authentic graphic authentication codes and said originals belonging to a class of authentic graphic authentication codes,
- performing an alignment of images of the training set with the template using position synchronization marks of the graphic authentication code of the image and of the template,
- defining subunits of a secure graphic portion of the graphic authentication code, said subunits representing a portion of the overall surface area of said secure graphic image,
- applying an optimization process of the template using images from the training set, said optimization performed using said defined subunits,
- extracting features from the optimized template that enable discrimination between the class of authentic and non-authentic graphic authentication codes of the training set, the template optimization process and feature extraction process comprising iterative operations for optimization of the template and feature extraction.

Another aspect of the invention concerns is a method of verifying the authenticity of a graphic authentication code using a decision making component of a computer program, the method comprising:

- extracting features from the graphic authentication code,
- receiving reference features calculated during a training process,
- performing a comparison of extracted and reference features using an optimization algorithm; and, based on that comparison, and
- determining whether the graphic authentication code is authentic, wherein the decision making component is configured by:
- defining a template based on a printing file of an original graphic authentication code or based on a scanned image(s) of an original printed graphic authentication code,
- providing a training set comprising a plurality of scanned images of original printed said graphic authentication codes as well as/without printed copies of graphic authentication codes, said copies belonging to a class of non-authentic graphic authentication codes and said originals belonging to a class of authentic graphic authentication codes,
- performing an alignment of images of the training set with the template,
- applying an optimization process of the template using images from the training set,
- extracting features from the optimized template that enable discrimination between the class of authentic and non-authentic graphic authentication codes of the training set, the template optimization process and feature extraction process comprising iterative operations for optimization of the template and feature extraction.

The optimization process may advantageously be performed using a plurality of subunits of a secure graphic portion of the graphic authentication code, each subunit representing a portion of the overall surface area of said secure graphic image.

The definition of subunits may be based on a deterministic function of overlapping or non-overlapping surface regions, or on a random or pseudo random function comprising a plurality of iterations seeking to optimize the determination of subunits, said determination seeking to determine the position, size and choice of subunits that seek to optimize discrimination between the class of authentic graphic authentication codes from the class of non-authentic graphic authentication codes.

Features extracted for the decision making component to discriminate between the class of authentic graphic authentication codes from the class of non-authentic graphic authentication codes may advantageously comprise performing cross-bin distance calculations of variables employing an algorithm using an earth mover's distance (EMD) calculation method.

In an advantageous embodiment, the graphic authentication code comprises position synchronization marks and the performing an alignment of images with the template uses the position synchronization marks of the graphic authentication code of the image and of the template.

In an advantageous embodiment, the position synchronization marks of the graphic authentication code are positioned at a distance of less than 50 %, preferably less than 20% of a linear size of the synchronization marks of the graphic authentication code.

In an advantageous embodiment, the graphic authentication code comprises at least four position synchronization marks distributed around the secure graphic image.

In an advantageous embodiment, the graphic authentication code comprises at least three position synchronization marks aligned along at least two edges of the secure graphic.

In an embodiment, said synchronization marks may be customized in terms of their color, shape, spacing, quantity and relative positioning with respect to said graphic authentication code secure element.

In an embodiment, a capture of graphic authentication code relevant data may be performed in a visual part of light spectrum.

In an embodiment, a capture of graphic authentication code relevant data may be performed in an infrared part of light spectrum.

In an embodiment, a capture of graphic authentication code relevant data may be performed in an ultraviolet part of light spectrum.

In an embodiment, synchronization may be performed based on periodicity property of said synchronization marks.

In an embodiment, preprocessing may be performed in a transform domain that is applied block wise.

In an embodiment, said reference information may be stored in a database, or in a memory of the system.

In an embodiment, a pointer to data used to generate reference information is integrated as part of said graphic authentication code relevant data.

In an embodiment, a classification task is accomplished according to a binary decision-making strategy, or to an outlier detection decision-making strategy, or according to principles of digital communication decoding.

In an embodiment, a gathering of information of said graphic authentication code as well as diffusion of information messages may be performed by a portable device while the remaining part of computations is delegated to a secure server.

Further objects and advantageous features of the invention will be apparent from the following detailed description and annexed figures.

## DESCRIPTION OF EMBODIMENTS OF THE INVENTION

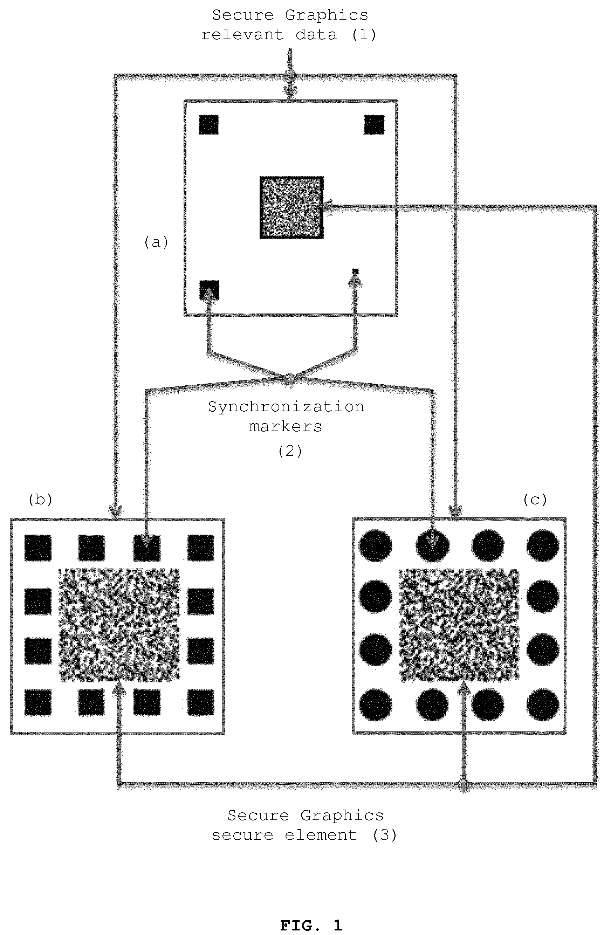

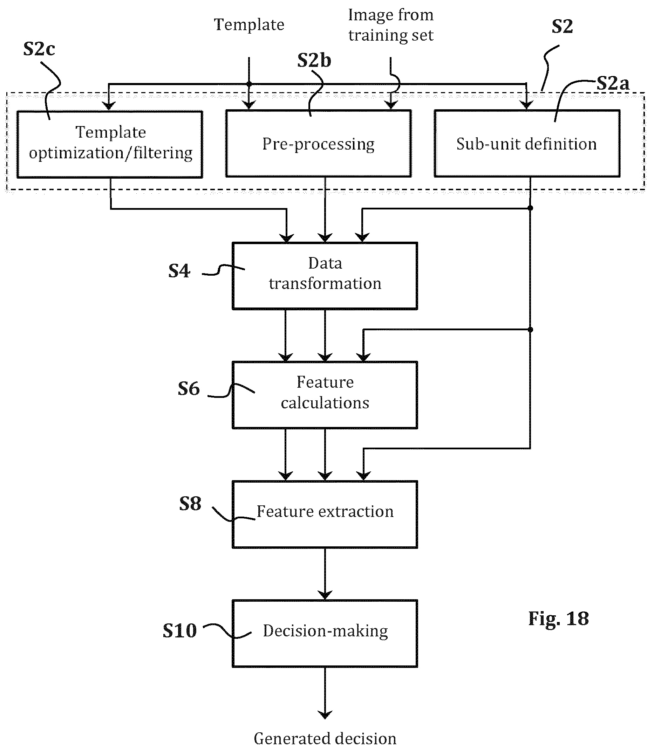

Referring to the figures, starting first with figures 1 and 18, a general description of features of the invention will first be described before providing examples of embodiments implementing the invention.

An example of a graphic authentication code according to an embodiment of the invention is illustrated in figure 1. The graphic authentication code comprises a secure graphics secure element 3 and position synchronization marks 2. The position synchronization marks 2 serve as spatial references that assist to determine the correct position and orientation of the secure graphic secure element 3 and thus to align a scanned code with a template and to compensate for deformations. The synchronization marks thus allow the correct positioning, alignment, scaling, angular orientation and compensation of other geometric deformations of a scanned authentication code that may be due to a non planar substrate on which the code is printed or imperfections of the optical capture process (e.g. position of the optical reader relative to the code, optical deformations of the optical reader lens). Preferably, the synchronization marks are positioned close to the secure graphic 3 in order to better correct for deformations and distortions of the graphic authentication code that is being read (scanned) and it is also advantage to have a plurality of synchronization marks surrounding the secure graphics secure element 3 so has to improve the correction for distortions that inherent to the said element 3 (figures 1,b and 1,c vs. figure 1,a).

The synchronization marks may form part of other elements associated with the graphic authentication code, for instance a two dimensional barcode or other forms of printed product identifiers. The synchronization marks may be those provided for the barcode or other printed elements associated to the graphic authentication code. In a preferred embodiment, the graphic authentication code is however provided with its own synchronization marks, positioned close to the graphic authentication code, preferably within a minimum range that allows their errorless extraction/separation from the said code, i.e., less than 5% or more preferably less than of the linear size of the synchronization marker (width or height in for a square shaped markers or diameter for circular ones).

The secure graphic secure element 3 is an image that comprises elementary printed cells, that may be printed in grey, black or in colors, the elementary cells being sufficiently small so that when they are printed by various known printing technics on a substrate, a certain measurable degradation or distortion of the elementary cells occurs unavoidably. The original printing file of the secure graphic secure element 3 contains a secret and is stored in a remote secure server, or in an encrypted manner locally or remotely such that the geometrical position, size, shape, intensity and color (if applicable) of the elementary sub cells is unknown to unauthorized persons. The secure graphic secure element 3 may for instance be provided in accordance with teachings found in WO2015/067725. However other formats of secure graphic images, *per se* known in the art, that are difficult to scan and reprint without alteration may be used within a scope of this invention. By the term "difficult to reproduce" is meant that the originator of the secure graphic secure element 3 printing file, and more generally the graphic authentication code printing file, uses this printing file to print original (authentic) graphic authentication codes. The printing process of the original graphic authentication code introduces a certain degradation of the elementary sub cells such that the printed image contains errors, deformations, distortions, or other differences with respect to the image defined in the original printing file. Due to these differences, an unauthorized person cannot determine exactly the content of the original printing file and therefore cannot generate an original printing file by reverse engineering. Although it may be possible with high resolution scanning devices to obtain a very precise scan of an original printed graphic authentication code, and subsequently to use the scan of said graphic authentication code to generate a printing file for a counterfeit graphic authentication code, a subsequent printing introduces further errors, deformations, distortions, or other differences (with respect to the image defined by the scanned printing file) that are unavoidable in the printing process. This subsequent degradation is measurable and distinguishes printed copies from printed originals. The challenge however is to provide an authentication system and process that allows to reliably distinguish between the original printed graphic authentication codes and the copies, in particular to reduce the number of false negatives and false positives during the verification process.

The present invention advantageously provides an improved process and system for distinguishing between authentic and copy printed **codes** that addresses the above mentioned shortcomings of existing solutions.

A first aspect of the process and system is to generate a decision making component of a graphic authentication code verification program. The process of generating the decision making component aims to select and/or adjust the parameters and algorithm steps used to distinguish original prints from non-original prints. A second aspect of the process and system is a verification component of the graphic authentication code verification program that is used for verification of authenticity of read (scanned) printed codes. The verification component may in particular use the generated decision making component to perform the verification.

Turning now first to the process of configuring the decision making component, this can be generally described as follows.

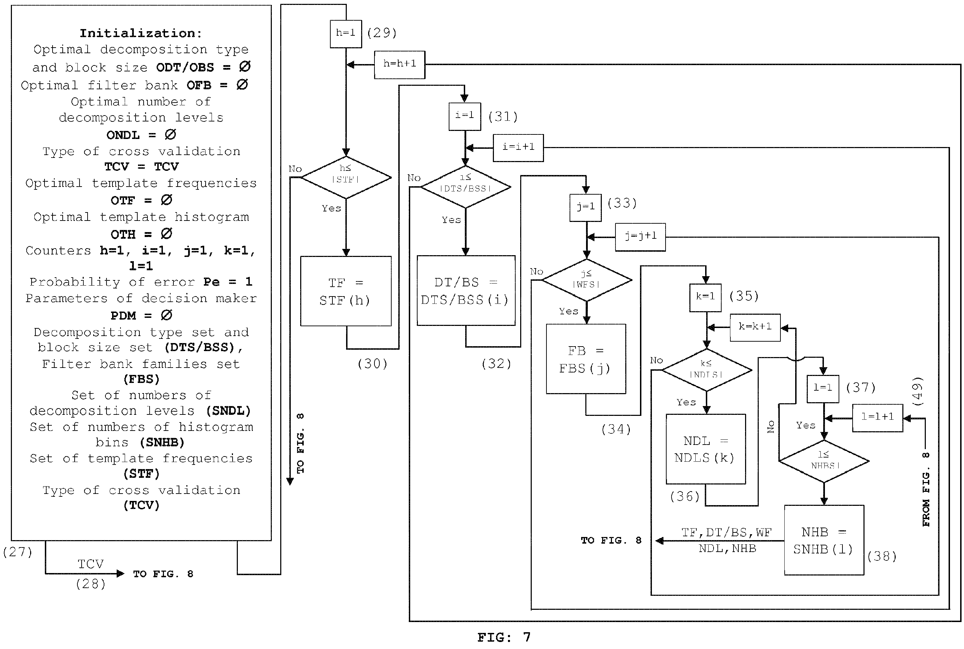

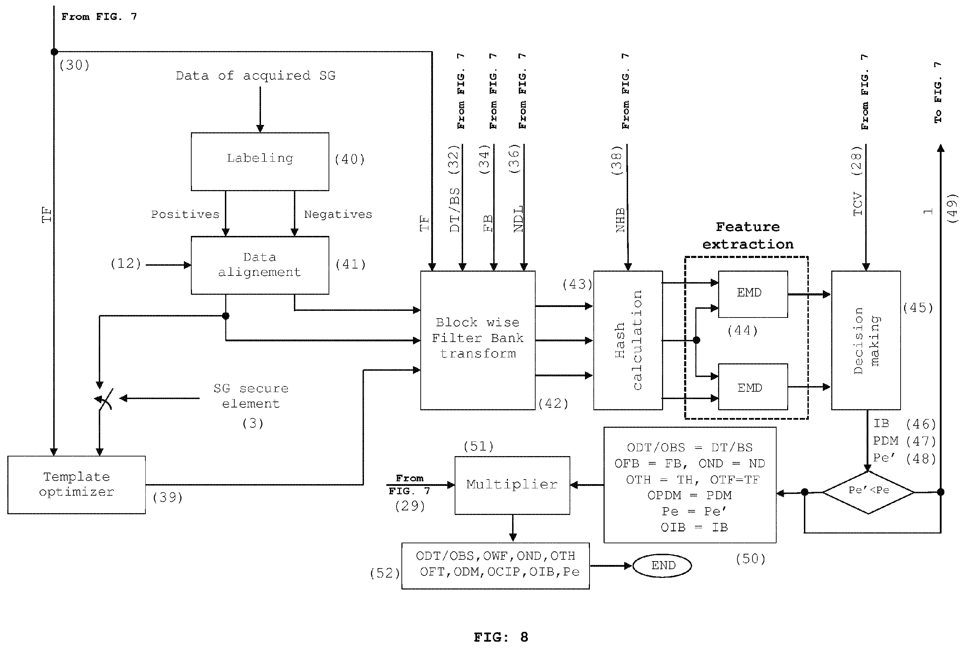

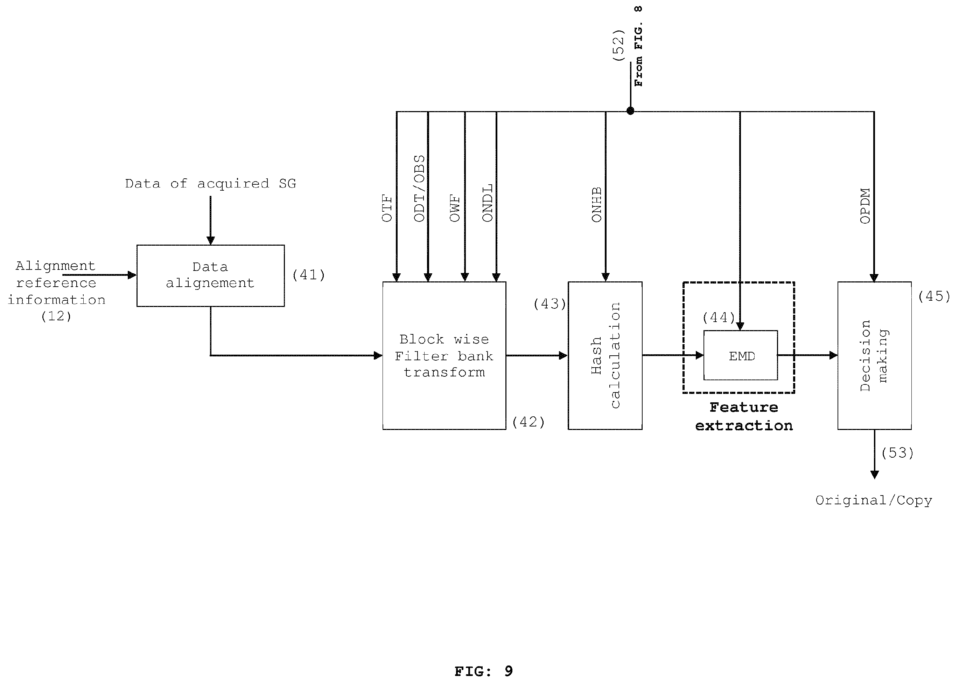

Figures 18 and 19 contain a simplified high level overview that illustrates one iteration of a process for configuring the decision making component for the case of a priori geometrically aligned images of the test set at the training stage and testing stage. The high level overview encompasses the more detailed embodiment of a process illustrated in figures 7 and 8 for training stage case and figure 9 for the testing stage case that will be described further on.

At the beginning of the said training iteration, an initial template that characterizes various features of a graphic authentication code to be printed or a scan/several scans of printed graphic authentication codes as well as initial values of optimization parameters that will be specified later are provided. The initial template may either be derived from the original printing file of the graphic authentication code, or be derived from a scanned image of a printed original graphic authentication code. The template is used to define various parameters of a reference image for the decision making component (such as local spatial frequencies measured in a certain block-based transform domain).

In a parameter definition stage S2 of the process, the template is used to assist fix the parameters that are used to configure the decision making component to determine if a code is authentic or not. This stage comprises sub processes S2a and S2b that may be performed simultaneously, sequentially, or in an interleaved manner depending on whether the parameters are interdependent with other parameters, or independent. Parameters may include values representing luminance and/or color as a function of the position (coordinates) in the image, average luminance, luminance gradient (change in luminance from one position to the adjacent position), type(s) of transformation(s) used to measure the said parameters as possible examples. Parameters may also be further extracted/combined by means of a hash function or extracted from losslessly or lossy compressed data.

One of the sub processes S2a comprises a breakdown of the template image into subunits, such subunits defining various portions of the image forming the secure graphic secure element 3 of the graphic authentication code.

The separation of the image into subunits may be performed by means of a deterministic function, for instance using a regular grid of overlapping or non-overlapping surface areas covering the image, or by a random function where sells of the said grid might have variable size and shape. In both cases one seeks to provide the configuration of the subunits that is the most efficient for enhancing the decision making accuracy.

Another sub process S2B may comprise template optimization and filtering. The template optimization and filtering may be performed on the secure graphic secure element 3 as a whole or on each of the sub units defined in the sub unit definition sub process S2a. The application of filters is configured to extract features useful for the decision making component, for instance to include features that best discriminate between originals and copies, or to filter out features that do not allow discrimination between originals and copies, or that are redundant or unstable for the given type of printing and/or secure graphic. For instance, variations in luminance between two sub units, or the average value of luminance of a sub unit, may be used as such indicators of whether the scanned image is an original or a copy, in which case these parameters may be retained in the template. Other examples may for instance include leaving out certain regions (sub units) of the image from the template because the variations in the parameters between different originals for those regions are similar to the amplitude of the variations in the parameters between originals and copies (low signal to noise ratio) such that discrimination between originals and copies cannot be performed reliably.

Following the parameter definition stage S2, the process may include a data transformation stage S4 in which the secure graphics secure element 3 and template might be transformed globally or block-wise using the various parameters and template characteristics that were defined at S2. For instance, a Fourier transform of every block from a regular grid of non-overlapping blocks of 40*40 elements or other functions that allows tocombine the plurality of parameters from the parameter definition stage could be applied at this stage.

Other types of transformations that may be performed on the defined parameters for each subunit or entire image of the secure graphic secure element 3 may include non-decimated wavelets, curvelets, beamlets, etc. The data representation on subunit level is used for the computation of characteristics that are used in the decision making component. Such characteristics may for instance be values such as variance of values such as luminance in a subunit or portion of the subunit, average values of luminance, and if the image has colour components, the colour (wavelength band) of a portion of the surface. The actual selection of the relevant values happens after decision making in order to choose those values that best discriminate the characteristics of an original printed graphic authentication code from non-discriminating features that for instance have a high variance or low signal to noise ratio that may lead to too many false negatives or false positives, or that are redundant with other features.

In a feature calculations stage S6, the transformed parameters may be subjected to calculations, in particular hash calculations, to generate a function on which a feature extraction method may be employed.

In a feature extraction stage S8, an "Earth Mover Distance" function per se known in the **domain of linear optimization** may advantageously be employed.

During feature extraction S8, cross-bin distances method of calculation (or EMD) may be used in order to calculate the optimal relationship for each of the parameters such as local histograms of luminances or of any other function of the said luminances such as local means, variances, etc.

The output of S8 may be used by the decision making component S10 that should assign an original/fake label to every image from the training set and validate the accuracy of the said assignment. The stages S2, S4, S6, S8 and S10 may be repeated until the optimization of parameters reaches a threshold, for instance defined by a probability of error Pe reaching a predefined value. Additionally, at the end of every iteration, the appropriate information is provided to update the parameters exploited by S2 and later on.

At the end of the last iteration, the values of the optimized parameters are provided for the use by the stages S12-S20 in figure 19 (such as type and parameters of subunit decomposition, informative template components, type of transformation, type of classifier, etc.)

According to the workflow present in figure 19, the query image split into subunits is transformed at S14 to a certain optimal domain. The obtained secure graphics secure element 3 representation is used for optimal feature calculations S16. Furthermore, the EMD between the template and query optimal features are performed at optimal feature extraction S18. Finally, the decision on the authenticity of the query secure graphic secure element 3 is generated at the optimal decision-making S20.

According to an advantageous aspect of the invention, prior to performing **S2 and S12,** a pre-processing stage comprising alignment of the image to be verified and the optimized template is first performed. If the alignment does not correspond to an acceptable value, for instance because the image taken is of insufficient quality or excessively deformed, then the authentication process may not be engaged and the user requested to perform another scan. This advantageously reduces the number of false negatives by rejecting images of insufficient scanning quality before the actual authentication verification process. In other words, prior to performing the authentication test there is a data alignment process whereby if the scanned image that is to be verified is not of sufficient quality the authentication process is rejected and the user requested to perform a new image capture.

The features illustrated in the figures are described hereafter, followed by a detailed description of embodiments of the invention.

**Fig. 1:** Embodiments for the graphic authentication code relevant data of the proposed system of authentication of brands and products based on secure graphics using cross-bin distances.

The graphic authentication code relevant data (1) includes synchronization marks (2) and the graphic authentication code secure element (3) incorporated into the graphic authentication code relevant data design.

The corresponding elements might be integrated into the graphic authentication code relevant data (1) following two different strategies.

According to the embodiment present in Fig. 1,a, such integration is performed partially exploiting a body of an assisting structure (such as a matrix 2D barcode). In this case, the synchronization marks (2) are the ones used in such structures (for instance, four squares used to align QR codes [18]).

Another alternative included into this disclosure is a custom design exemplified in Fig. 1,b and Fig. 1,c, where the synchronization marks (3) are periodically spaced regular or irregular shapes that are located in the closest vicinity of the graphic authentication code secure element (3) in a way that permits their spatial separation at the output of the print and scan channel.

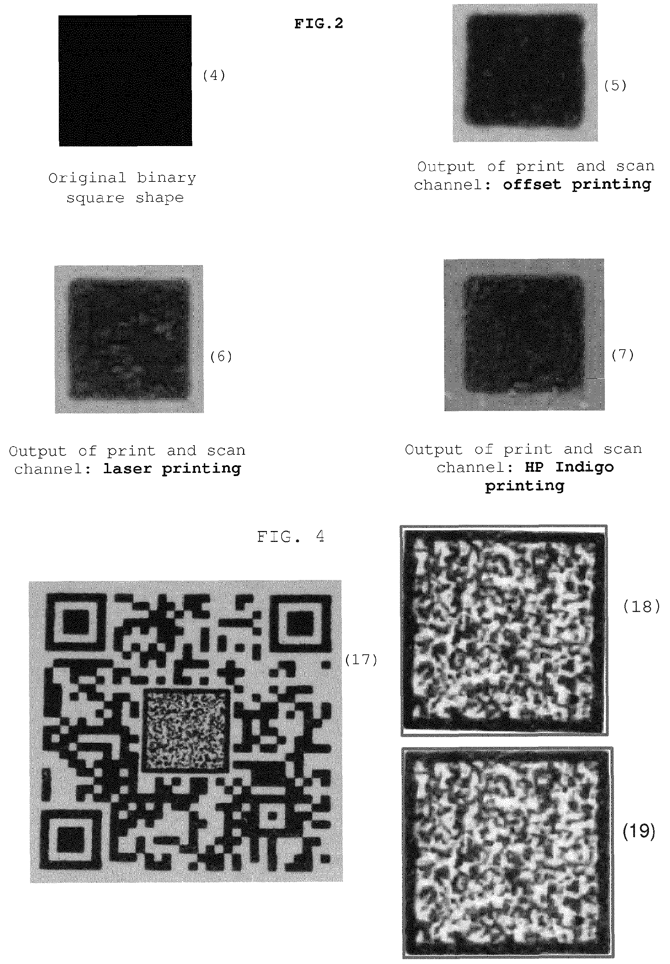

**FIG. 2:** An embodiment for the alignment/ synchronization of the graphic authentication code relevant data of the proposed system of authentication of brands and products based on secure graphics using cross-bin distances.

The description is exemplified for the graphic authentication code relevant data embodiment from Fig. 1,a and can be equivalently applied to the ones presented in Fig. 1,b and Fig. 1,c with slight modifications that concern the amount of extracted synchronization marks' representatives, that are defined as coordinates of a unique group of points extracted from/computed based on every marker. It is important to indicate that only the custom markers are used for alignment if available. The increased number of the markers is required in order to cope with more complex types of geometric transformations that the projective one [19].

In what follows, the graphic authentication code relevant data (3) that corresponds to an a priori successfully quality-validated query is transferred to the alignment stage that encompasses the following operations:

First, the acquired data (4), is converted into a binary (black and white) color format and the corresponding sequence of morphological erosion, dilation, closure and filtering operations is applied in order to extract binary synchronization marks (6) at the Binarized Markers' Extraction (BME) (5).

At the next stage, the coordinates of the markers' representatives (9) are estimated using either maximum likelihood, or maximum a posteriori probability, penalized/robust or using no penalty term or any suitable estimation strategy at the Estimation of Markers' Representatives (EMR (7)).

In what follows, the marker representatives' coordinates extracted off-line from the template/reference (8) and from the graphic authentication code relevant data (1) of the query (9) are matched in order to estimate the sought geometric deformation transform (transformation operator ($\hat{T}$(.)) in the Geometric Transform Estimation (GTE) block (10).

Finally, the obtained estimate is used to perform recovery of a high quality graphic authentication code secure element data (12) using appropriate Geometric Transform Compensation (GTE) method (11).

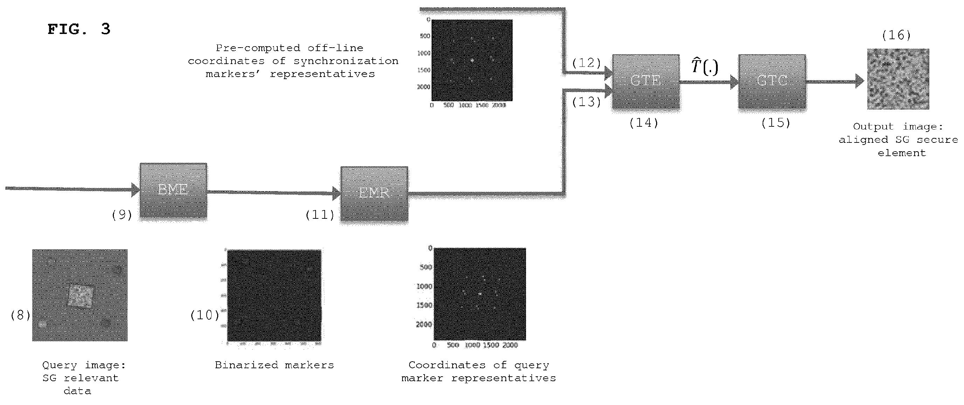

**FIG. 3:** Examples of distortions that are introduced into graphics by the print and scan channel.

A square binary pattern (13) is printed by an offset printer at 2540 dpi resolution and acquired by a camera embedded in a Smartphone (e.g. Samsung Galaxy S5) that was operated in full high definition video capturing mode (14). The acquisition result justifies existence of a shape deformation (irregular character of transformed straight lines and undetermined corners) of the pattern due to a dot-gain effect as well as because of out-of-control inherent printer irregularity introduced while creating a printer plate or during information printing on the substrate.

The same phenomenon is observed in the case other types of printing are exploited, i.e., laser at 1200 dpi (15) or HP Indigo at 812 dpi (16).

**FIG. 4:** An example of comparison of the accuracy provided by alignment based on Zxing [20] library and detection of corners [13] vs. the embodiment described in Fig. 2.

An acquired graphic authentication code relevant data (17) is aligned using the approach exploited in [13] and the embodiment described in Fig. 2. The obtained results are presented in (18) and (19), respectively.

Even visual inspection is sufficient to validate a higher alignment accuracy of the latter approach.

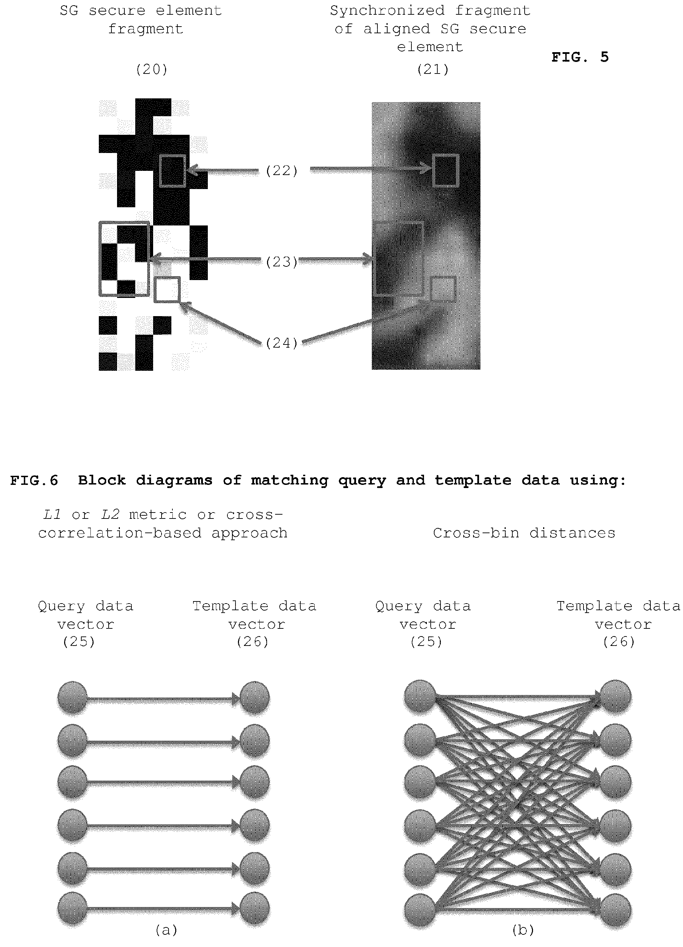

**FIG. 5:** Exemplification of the non-stationary behavior of the print and scan channel in the application of authentication of brands and products based on secure graphics.

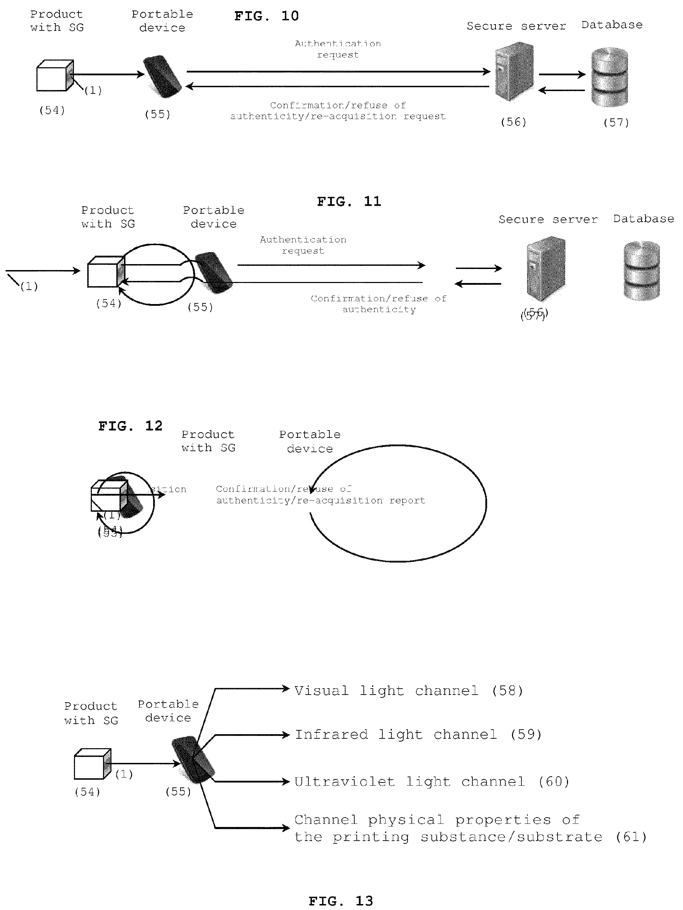

The Figure contains a magnified fragment of the digital template (20) used to print the graphic authentication code secure element (3) (Fig. 12, a) as well as its printed and aligned scanned version (21).

In what follows, the latter was binarized and the crossover probability Pb of an equivalent binary symmetric channel was computed in three zones of interest that are bounded by three rectangles: in a uniform printed region (Pb=0.07); in a uniform substrate region where only substrate imperfections contribute to bit flipping (Pb=0.03); in a transition region (Pb=0.57). Obvious time varying channel characteristics justify its non-stationarity [21].

**Fig. 6:** A schematic exemplification of the difference between two classes of decision-making strategies.

The Figure contains two diagrams of matching two data vectors that schematically represent aligned graphic authentication code secure elements (3) extracted from the query (25) and template (26), respectively. The matching is performed using classical L1-, L2-, or cross-correlation-based approaches (Fig. 6, a) vs. application of the cross-bin based one (Fig. 6, b). The sub optimality of the former technique in comparison to the later one is provided by the definition of sets where the solution to the matching problem is sought. Since the classical approach is constrained to a subset of the set used in the cross-bin case, it can never achieve better results that the cross-bin-based method.

**FIG. 7** and **FIG. 8:** An embodiment for the training of the decision-making of the proposed system of authentication of brands and products based on secure graphics using cross-bin distances.

In the scope of this embodiment, the main goal of the training is to optimize signal processing and decision making in order to minimize the probability of any of the following events: (a) an original is attributed to the class of copies; (b) a copy is assigned to the class of originals; (c) a joint probability of events in (a) and (b), that are measured either on average or in a max sense.

To achieve this goal, the following sequence of operations procedure should be successfully executed:

Initialization (27) (Fig. 7): during this operation the parameters that define optimal decision-making performance are initialized by zeros/empty sets in the most of the cases. These parameters are:

- Type of cross-validation (TCV) (28), i.e., one of leave-one-out cross-validation, leave-p-out cross-validation, k-fold cross-validation, repeated random subsampling cross-validation;
- Information on the frequency content of the reference/template (TF), while OTF designates the optimal value of the TF (30);
- Type of image block decomposition (random or deterministic) as well as block size/range of block sizes (DT/BS), while ODT/OBS designates the optimal value of the DT/BS (32);
- Filter bank (FB), while OFB designates the optimal value of the FB (34) ;
- Number of decomposition levels (NDL) applied using the FB, while ONDL designates the optimal value of the NDL (36);
- Information on the length of the extracted hash (NHB), while ONHB designates the optimal value of the NHB (38);
- Coordinates of the informative blocks (IB) that provide the best decision making performance, while OIB designates the optimal value of the IB (46);
- Parameters of the decision maker (PDM) such as type of classifier/decoder, kernel type, batch size, learning rate, shrinking heuristic, class weights, decision boundary, number of support vectors, intercept, codebook, as possible examples, while OPDM designates the optimal values of the PDM (47);
- The same time, the worst possible value (one) is initially assigned to the probability of incorrect decision Pe;
- Auxiliary iteration counters h (29), I (31), j (33), k (35), 1 (37) are initialized by ones.

Simultaneously, the ranges for the aforementioned parameters are defined in terms of the corresponding valid sets:

- Set of TFs (STF) that includes a range of decompositions that define time-frequency content of the reference/template;
- Set of DT/BSs (DTS/BSS);
- Set of FBs (FBS);
- Set of NDLs (NDLS);
- Set of NHBs (NHBS).

The available data of validated quality (a training set) ideally composed of the a priori acquired graphic authentication code secure elements (3) that protect authenticity of genuine items as well as obtained from generated copies are labeled accordingly (as positive and negative examples). In what follows, the labeled data are aligned to the predefined coordinates using appropriate synchronization that receives reference information concerning alignment coordinates that are deduced from the reference data/template (Fig. 1 and Fig. 2).

After completion of the Initialization (27) and alignment stages, the following iterative procedure is launched. For every TF (30) from STF, DT/BS (32) from DTS/BSS, FB (34) from FBS, NDL (36) from NDLS, NHB (38) from NHBS, for the given TCV (27), and every secure element of the graphic authentication code in the training set do (Fig. 8):

- divide an image and a template into a collection of overlapping/non-overlapping blocks of the given size/range of sizes, following either random or deterministic splitting strategy according to the DT/BS (32);
- apply an NDL (36)-level transform specified by the FB (34) to every image and template block,
- compute a hash according to the NHB (38) and finally measure the EMD (44) according to equations (1) - (6);
- perform decision-making using the computed features of data from the training set that is implemented using a support vector machine (SVM) with either a linear kernel, or a polynomial kernel, or a sigmoid kernel, or a Gaussian RBF kernel, or any their combination; a deep learning, random forests, decision trees, bagged trees, neural networks, or any other suitable supervised binary classification framework; minimum distance decoder, generalized minimum distance decoder, lattice-based decoder, iterative decoder with corresponding codebooks; and compute the probability of the incorrect decision/decoding Pe' for the given values of PDM (47). This process is iterative and is repeated for every possible combination of features that are extracted from the blocks obtained for the given DT/BS (32) value. At the end of this process the best block configuration IB is selected that corresponds to the smallest Pe'(48);
- if Pe'< Pe, perform the following assignments (50):

    ODT/OBS = DT/BS;
    OFB = FB;
    OND = ND;
    OTF = TF;
    OHD = HD;
    OCIP = CIP;
    OIB = IB;
    Pe = Pe';

Pass to the next iteration (49).

At the end of the last iteration defined by (29) and (50) in (51), that corresponds to the following assignments:

    h = | TFS |;
    i = | DTS/BSS |;
    j = | WFS |;
    k = | NDLS |;
    l = | SNHB |,

ODT/OBS, OFB, OND, OTF, OHD, OIB as well as decision maker optimal inherent parameters OPDM constitute the output of the training stage (52) and are made accessible and available when are needed to system embodiments explained in Fig. 10 - Fig. 12. It is important to note that the OTF contains information only about the blocks indicated by the OIB.

**FIG. 9:** An embodiment for the verification of the decision-making of the proposed system of authentication of brands and products based on secure graphics using cross-bin distances.

It is assumed in the scope of this disclosure that at this stage the necessary training has been already performed and the explicit characteristics of the classes of originals and copies as well as reference- and decision-making-relevant data that minimize the probability of any of the following events are available: (a) an original is attributed to the class of copies; (b) a copy is assigned to the class of originals; (c) a joint probability of events in (a) and (b) that is measured either on average or in a max sense. The details of the training of decision-making are present in Fig. 7 and Fig. 8.

It is as well supposed that at the beginning of the verification stage the data relevant to the graphic authentication code are successfully acquired by the camera of the customer's portable device and their quality is successfully validated either by the remote server or on the device. The detail on actions that follow quality invalidation is present in descriptions of Fig. 12 - Fig. 14 of this disclosure.

The acquired validated data are transferred to the alignment (41) where these data is synchronized using reference information concerning alignment coordinates (12) that are a priori deduced from the reference data/template.

The output of the alignment, the graphic authentication code secure element (3) extracted from the graphic authentication code relevant data (1) in predefined coordinates, is used as an input to a sequence of operations that are terminated by feature extraction. Using the available outputs of the decision-making training (Fig. 7 and Fig. 8), this stage is organized as follows:

an image of the graphic authentication code secure element (3) is split into blocks in a way that is specified by ODT/OBS;

- the ONDL block wise transformation using the OFB filters is performed (42) on every of the OIB blocks extracted from the decomposed data;
- hash calculation (43) is accomplished using information supplied in the ONHB and OTF;
- EMD distances between the corresponding IB blocks of the image of the graphic authentication code secure element and the reference/template is computed according to equations (1) - (6) in (44);
- finally, the verdict (53) about authenticity confirmation (Original)/rejection (Copy) is generated by the decision maker (45) that is governed by the OPDM. The verdict is considered as the input for the message that should be generated and sent to the customer. The message generation, transmission and activation is detailed in description of Fig. 12 - Fig. 14.

**Fig. 10:** An embodiment for the proposed system of authentication of brands and products based on secure graphics using cross-bin distances: all involved data processing and manipulations (quality assessment, synchronization, and feature extraction/hashing, error correction decoding) is performed on the remote secure server.

The role of the portable device (55) does not assume any customized data processing and is based on standard functionalities of the device and its operating system. Therefore, this embodiment might remain functional without prior installation of any specialized application. According to the second option, such an application is installed and the mentioned functionalities are organized within its API.

The item (54) with the graphic authentication code relevant data (1) generated according to one of embodiments presented in Fig. 1 is acquired by a camera embedded in a portable device (55). The acquired data are sent to the remote server (56) connected to the secured storage/database (57) in order to validate item's authenticity using an MMS, WLAN, WAP, I-MODE as possible examples over GSM, TDMA, CDMA, UMTC networks or any appropriate communication infrastructure.

The server (56) receives the request and extracts the graphic authentication code relevant data (1). In what follows, the necessary processing is applied targeting accurate extraction of the graphic authentication code secure element (3) that is initiated by the data quality assessment.

If the quality of the extracted data is not satisfactory due to intolerable distortions and artifacts, the server (56) generates a message and sends it to the portable device (55) to request another acquisition. If after a given number of acquisitions the quality of the data is still invalidated, the portable device (55) will be blocked and blacklisted by the server (56).

If the quality assessment was successfully terminated, the remote server (56) completes the processing chain that includes data alignment/ synchronization, and error-correction.

The output of this stage is used to perform feature extraction/robust hash computation using cross-bin principle (Fig. 6) based on the reference/template data that the server receives from the database (57) or generates online provided some auxiliary data are available.

Finally, the generated features are transferred to the decision-making. Depending on the operation results, the message confirming or rejecting authenticity of the item is generated by the server, sent to the portable device (55) in the body of an SMS, MMS, WLAN, WAP, I-MODE as possible examples over GSM, TDMA, CDMA, UMTC networks or any appropriate communication infrastructure. The received message is activated through the portable device output means (i.e., display, loudspeaker, vibro) in several possible forms that include text, images, and vibration or any other that is available and appropriate.

**FIG. 11:** An embodiment for the proposed system of authentication of brands and products based on secure graphics using cross-bin distances: a part or entire chain of the involved data processing and manipulations (quality assessment, synchronization, and feature extraction/ hashing) is performed on the portable device. The eventual remaining part of the processing chain and decision-making are delegated to the secure server.

The item (54) with the graphic authentication code relevant data (1) generated according to one of embodiments presented in Fig. 1 is acquired by a camera embedded in a portable device (55) operated by the a priori installed specialized application.

The acquired data are processed on the device (55) in order to validate its quality.

If the quality of the data is not satisfactory due to intolerable distortions and artifacts, the application generates a message and activates it on the device display in a textual or visual form (as an image or video), or using an audio signal diffused via the device embedded speakers, or using vibration to request another acquisition trial. If after a given number of the trials the quality of the data remains invalidated, the application sends the portable device (55) credentials to the remote server (56) in a body of SMS, MMS, WLAN, WAP, I-MODE as possible examples over GSM, TDMA, CDMA, UMTC networks or any appropriate communication infrastructure. Furthermore, the server (56) blocks and blacklists the customer's portable device (55). The corresponding information is stored in secure database (57) and might be sent to the customer in a body of SMS, MMS, WLAN, WAP, I-MODE as possible examples over GSM, TDMA, CDMA, UMTC networks or any appropriate communication infrastructure.

If the quality assessment was successfully terminated, the portable device (55) completes the delegated eventual processing using the installed specialized application and sends its output as a part of the authentication confirmation/rejection request to the remote server (56) in a body of any of SMS, MMS, WLAN, WAP, I-MODE that is appropriate over GSM, TDMA, CDMA, UMTC networks or any appropriate communication infrastructure.

The server (56) receives the request, extracts the output of the processing accomplished by the device (55) and completes the processing chain that includes data alignment/synchronization, and error-correction or any part of these operations assigned to it.

The output of this stage is used to perform feature extraction that is based on the reference/template data that the server receives from the database (57) or generates online provided some auxiliary data and using cross-bin extraction strategy (Fig. 6). Depending on the matching results, the message confirming or rejecting authenticity is generated by the server, sent to the portable device (55) in the body of an SMS, MMS, WLAN, WAP, I-MODE as possible examples over GSM, TDMA, CDMA, UMTC networks or any appropriate communication infrastructure. The received message is activated through the portable device output means (i.e., display, loudspeaker, vibration) in several possible forms that include text, images, and vibration or any other that is available and appropriate.

**FIG. 12:** An embodiment for the proposed system of authentication of brands and products based on secure graphics using cross-bin distances: all involved data processing and manipulations (quality assessment, synchronization, and feature extraction/ hashing) as well as decision-making are performed on the portable device.

The item (54) with the graphic authentication code relevant data (1) generated according to one of embodiments presented in Fig. 1 is acquired by a camera embedded in a portable device (55) operated by the a priori installed specialized application.

The acquired data are processed on the device (55) in order to validate its quality.

If the quality of the data is not satisfactory due to intolerable distortions and artifacts, the application generates a message and activates it on the device display in a textual or visual form (as an image or video), or using an audio signal diffused via the device embedded speakers, or using vibration to request another acquisition trial. If after a given number of such acquisition trials the quality of the data remains invalidated, the application will suspect that either some problems have occurred during enrollment/production or that a counterfeit case was discovered. Consequently, a corresponding report will be generated by the application and stored in the internal memory of the customer's device (55) for further distribution among the concerned authorities (enroller, brand owner, anti-counterfeiting agency, police as possible sinks). The report might be transferred to the remote destination in a body of SMS, MMS, WLAN, WAP, I-MODE as possible examples over GSM, TDMA, CDMA, UMTC networks or any appropriate communication infrastructure.

If the quality assessment was successfully terminated, the portable device completes the remaining part of the processing chain using the a priori installed specialized application and transfers its output to the decision-making as a part of the authentication confirmation/rejection request. It is important to underline that the output, i.e., extracted features, is produced using the reference/template data that are stored in the specialized application internal memory, accessible by the application in the memory of the device, or generated online by the application provided some auxiliary data are available in the device internal storage using cross-bin extraction strategy (Fig. 6).

At the decision-making the output of the previous stage is matched vs. the a priori stored or computed online reference data.

Depending on the matching results, the message confirming or rejecting authenticity is generated by the specialized application and activated on the portable device (55) display in a textual or visual form (as an image or video), or using an audio signal diffused via the device embedded speakers, or using vibration or any other that is available and appropriate.

**FIG. 13:** An example of performance of the disclosed system of brand and products authentication based on secure graphics and using cross-bin distances.

The figure contains examples of images of the graphic authentication code secure elements (3) printed by an HP Indigo printer at 812 dpi and acquired by a camera of a Smartphone (e.g. Samsung Galaxy S5) that operates in full high definition video capturing mode ((58) and (60)). Additionally, two copies (59) and (61) of the graphic authentication code secure elements (3) are presented alongside.

The copies are generated based on the aligned original graphic authentication code secure elements (3) acquired by a camera embedded in a Smartphone (e.g. Samsung Galaxy S5) operational in full high definition video capturing mode ((58) and (60) represent examples of such acquisitions).

Furthermore, the acquisition is processed using low pass filtering, unsharp masking, binarization and morphological erosion. The output of the processing is printed by a laser printer at 1200 dpi and converted to the digital format by the camera embedded in a Smartphone (e.g. Samsung Galaxy S5) operational in full high definition video capturing mode to produce the copies (exemplified by (59) and (61)).

The inherent parameters of the processing operators (cut-off frequency, binarization threshold and structural element, respectively) are optimized in order to provide the best quality match between acquisitions of the aligned original graphic authentication code secure element (3) and the corresponding copy that is produced based on the element by applying the presented above processing chain. The goodness of fit might be measured by visual similarity, Watson, just noticeable difference, peak-signal-to-noise-ratio, signal-to-noise-ratio, mean squared error, mutual information as possible examples or by any other appropriate objective or subjective quality metric [22] that is found useful.

These four images (58)-(61) serve a twofold purpose: (a) they demonstrate that printing process might inherits a considerable variability that complicates correct authentication via enlarging the variance of the data in the class of originals; (b) they indicate that application even of a chain of simple image processing operations is able to produce lookalike copies.

Finally, (62) and (63) contain experimental results of separation of 14 original graphic authentication code secure elements (3) and 14 corresponding said copies using the method presented in [13] and one of the embodiments the system disclosed in this description (Fig. 7 - Fig. 10). While the former results demonstrate highly inaccurate separation (62), the disclosed technique permits linearly distinguish the two classes in an errorless manner (the dashed lines in (63) are used to indicate the margin of a linear SVM while the solid one located in-between represents the separation hyperplane of the classifier).

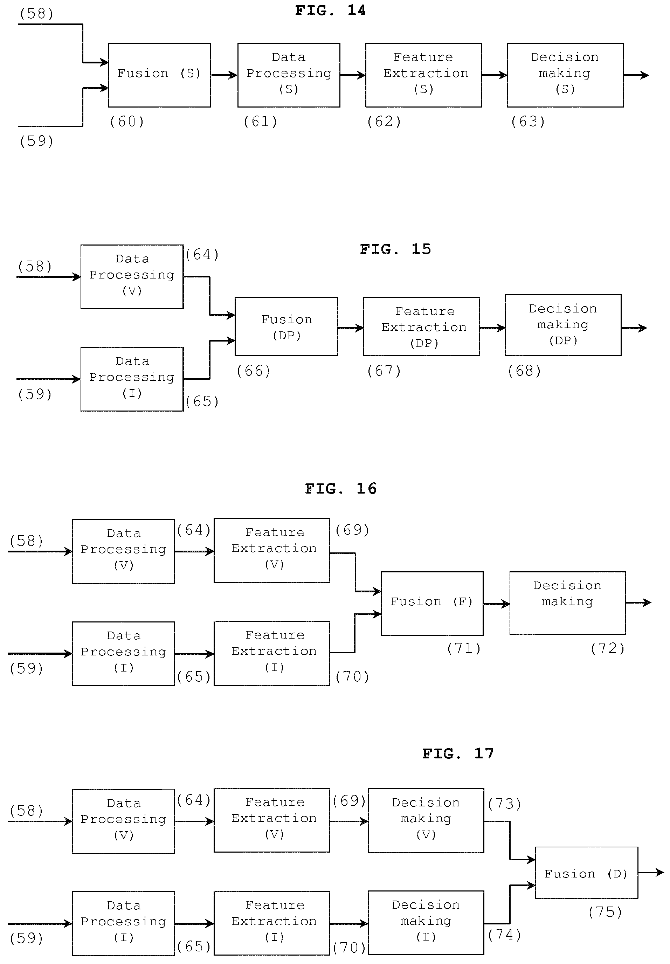

**FIG. 14:** An example of multimodal information flow describing graphic authentication code secure element.

The figure contains the embodiment of an item (54) with graphic authentication code relevant data (1) integrated into the item. By means of various sensor-defined channels that are currently made available by manufacturers of portable devices (55)/will become available in future as parts of such devices' provided functionality, a multimodal representation of the graphic authentication code secure element (3) will be available. As possible examples one might consider acquisitions in the visual light range (64), in the infrared light range (65), in the ultraviolet light range (66), or of the physical properties of the printing substance/substrate (67) using, for instance, cameras that are sensitive in the corresponding ranges of light waveranges.

**FIG. 15:** An embodiment for the multimodal system of authentication of brands and products: signal fusion is performed at the sensor level.

It is assumed that minimum two informative signals representing graphic authentication code secure element (3) or/and the item (54), i.e., (64) and (65), are available in the scope of this embodiment. Here and hereafter the case of two modalities denoted by V and I, respectively, is considered (a generalization to a larger number of accessible modalities is straightforward).

In what follows, the signals (64) and (65) are combined together in the Fusion (S) block (68). The output of (68) is acting as an input to the Data Processing (S) (69) followed by Feature Extraction (S) (70). Finally, the extracted features are exploited to generate a verdict that should either approve or reject authenticity of the item (54) at the Decision making (S) (71). It is important to note that (69)-(71) are optimized with respect to the Fusion (S) (68) output.

**FIG. 16:** An embodiment for the multimodal system of authentication of brands and products: signal fusion is performed at the data processing level.

It is supposed that the signals (64) and (65) are individually processed at Data Processing (V) (74) Data Processing (I) (75). The processing might be organized either in a dependent manner (the switches (72) and (73) are closed) or in an independent manner (the switches (72) and (73) are open) or in a partially dependent manner (one of the switches (72) and (73) is open and another one is closed).

In what follows, the signals produced at the processing stage (74) and (75) are combined together in the Fusion (DP) block (76). The output of (76) is acting as an input to the Feature Extraction (DP) (77). Finally, the extracted features are exploited to generate a verdict that should either approve or reject authenticity of the item (54) at Decision making (S) (78). Similarly to the embodiment detailed in Fig. 15, (77) and (78) are optimized with respect to the Fusion (DP) (76) output.

**FIG. 17:** An embodiment for the multimodal system of authentication of brands and products: signal fusion is performed at the feature extraction level.

It is supposed that the signals (64) and (65) are individually processed at Data Processing (V) (74) Data Processing (I) (75) and the corresponding features are individually extracted at Feature extraction (V) (81) and Feature Extraction (I) (82).

Similarly to the case discussed in Fig. 16, processing of the signals might be organized either in a dependent manner (the switches (72) and (73) are closed) or in an independent manner (the switches (72) and (73) are open) or in a partially dependent manner (one of the switches (72) and (73) is open and another one is closed).

Analogically, feature extraction is accomplished independently (if the switches (79) and (80) are open), dependently (if the switches (79) and (80) are closed) or in a partially dependent manner (if one of the switches (79) and (80) is open and another one is closed).

In what follows, the features extracted at the extraction stage (81) and (82) are combined together in the Fusion (F) block (83). The output of (83) is acting as the input to the Decision making (F) (84) that is optimized with respect to the Fusion (F) (83) output. At this last stage a verdict that either approves or rejects authenticity of the item (54) is produced.

**FIG. 18:** An embodiment for the multimodal system of authentication of brands and products: signal fusion is performed at the decision level.

It is supposed that the signals (64) and (65) are individually processed at Data Processing (V) (74) Data Processing (I) (75) and that the corresponding features are individually extracted at Feature extraction (V) (81) and Feature Extraction (I) (82). The extracted individual features are then individually processed by Decision making (V) (87) and Decision making (I) (88) that produce assignments for every modality.

Similarly to the case discussed in Fig. 16 and Fig. 17, processing of the signals might be organized either in a dependent manner (the switches (72) and (73) are closed) or in an independent manner (the switches (72) and (73) are open) or in a partially dependent manner (one of the switches (72) and (73) is open and another one is closed).

Following methodology similar to the one of Fig. 17, feature extraction in (81) and (82) might follow dependent (the switches (79) and (80) are closed), independent (the switches (79) and (80) are open) or partially dependent (one of the switches (79) and (80) is open and another one is closed) strategies.

Furthermore, the individual verdicts are generated at (87) and (88) independently (if the switches (85) and (86) are open), dependently (if the switches (85) and (86) are closed) or in a partially dependent manner (if one of the switches (85) and (86) is open and another one is closed).

Finally, the verdicts are combined together in the Fusion (D) block (89) in order to produce the final decision in order to approve or reject the item authenticity.

Several main building blocks and operations are defined hereafter that address criticism of existing systems.

**Secure graphic relevant data.** In the scope of this disclosure, the graphic authentication code relevant data (1) includes the synchronization marks (2) and graphic authentication code secure element (3) incorporated into the common data design (Fig. 1).

In the scope of this disclosure, the graphic authentication code secure element (3) is a pattern represented by a set of dots or groups of dots, connected or disconnected, unprotected or protected by any of existing suitable error-correcting mechanism distributed in randomly or deterministically defined coordinates, of constant or varying density, color and shape.

The ways to integrate the element into the graphic authentication code relevant data (1) vary. The process could exploit a body of an assisting structure (such as a matrix 2D barcode (Fig. 1, a)) or to use a custom design (Fig. 1,b and Fig.1, c). The only constraint is to guarantee the possibility of accurate estimation and compensation of eventual geometric degradations introduced due to abovementioned imperfections inherent to both enrollment and acquisition. For this purpose, the structure should already contain elements suitable for the correction, i.e., such that possess certain energy concentration (composed of a considerable amount (100 or 1000 or 10000) of connected elements of a regular/irregular shape that are periodically located in the 2D Cartesian coordinates (as four markers that are used for alignment of habitual 2D QR barcodes [18] (Fig. 1, a), i.e., three squares of equal size located near lower left, upper left and upper right QR corners as well as another square of a smaller size located at a certain distance from the right lower QR corner). The number of such elements should be sufficient to cope with a target class of geometrical transformations. In the scope of this embodiment, a minimum of four such elements is required in order to guarantee accurate recovery from at least projective geometric transformations [19].

In the scope of this disclosure, the former strategy might be used exclusively to satisfy the requirements of the serialized and hybrid printing in terms of maintenance of the template/reference data, to satisfy eventual marketing needs (in this case, the barcode is used as a container of the relevant information). Any application of the code to improve quality of the authenticity protection (as disclosed in [13]) is not foreseen here.

This embodiment applies to any other matrix 2d barcode available on the market such as Data Matrix, Aztec Code, QCode, SPARQCode, EZcode, MaxiCode as possible provided that the distortions introduced during integration still permit extraction of the graphic authentication code secure element (3).

In the case, the graphic authentication code reference data are embodied as presented in Fig. 1, a, the markers of the barcode/ structure (a QR code in this particular exemplification) are exploited as synchronization marks.

In the case the custom integration of the graphic authentication code relevant data is performed, the markers (for instance, 12 squares or circles (Fig. 1, b and Fig. c) or any other appropriate graphic designs of a regular or irregular shape, the same or different colors, that are located periodically in the 2D Cartesian coordinates in the direct vicinity of the graphic authentication code secure element (3)) that are generated in a separable spatial way from the graphic authentication code secure element (3). They should be separable as well of other eventual parts of the item design that do not belong to secure graphic relevant data (1) such as a body of an assisting structure that are located in the closest neighborhood of the graphic authentication code secure element (3) the graphic authentication code.

A larger number of such markers (2) is required to provide a level of redundancy sufficient to cope with more complex transformation types [19]. A closer placement of the markers to the graphic authentication code secure element (3) targets a more accurate characterization/estimation and compensation of the transformation that directly impacts the secure element and not its surrounding (that is the case for Fig. 1, a and [13]).

In the scope of this disclosure, **synchronization** is the process of correcting an acquired and quality validated image/two-dimensional array of color values representing the graphic authentication code in terms of compensation distortions introduced due to imperfections of the enrollment and acquisition processes (certain level of spatial intolerance of printing due to technological limits of various printing types in general and hybrid printing in particular (due to imprecise mutual alignment of elements printed separately, in the latter case), eventual motion of the item with respect to the acquisition device, some projective, affine or similarity transformations are usually unavoidable for the graphic authentication code printed on solid substrates while some nonlinear degradations might be introduced when the substrate is flexible or due to unexpected printing imperfections as substrate eventual physical deformations to name some).

Some examples of such distortions introduced by several types of printing (offset (5), laser (6) and HP Indigo (7)) are exemplified in Fig. 2. In particular, they demonstrate how a binary square shape (4) is converted to a more complex one by the print and scan channel such that parallelism and straight character of initially parallel straight lines is only approximately preserved and how ideal right angle corners become blurred and not well defined/indefinite.

In order to overcome instable behavior inherent to alignment techniques due to distortions that are inevitable in print and scan channels, could be initiated by flexible substrates like paper labels, polyethylene, tissue to name a few, synchronization of the graphic authentication code relevant data is performed using the markers (2) that have higher robustness to printing distortions (Fig. 1). Such markers should satisfy two constraints: be energetically appealing and possess a certain level of redundancy that is sufficient to cope with a target distortion type (for instance, minimum coordinates of four pairs of said markers are mandatory to estimate and compensate for perspective transformation).

If both conditions are met, the synchronization is performed according to the following sequence of steps (Fig. 3):

image of the graphic authentication code relevant data (1) of the query (8) is converted to a binary form/binary (black and white) color format. This transformation is accomplished using either acquired data (for 8 bit color depth) or based on any of three planes/any their combination of the acquisition that was carried out with a higher color depth. The binarization is performed via comparison of individual pixel luminance levels to the threshold defined based on the statistical analysis of the data empirical color distribution/histogram. If these levels are inferior to the threshold, they are converted to 1 or 255. If they are superior or equals to the threshold, they are transformed to 0. The obtained binary image, is processed in a way that the sought markers (10) are extracted using a sequence of computer vision morphological operations (morphological filtering, erosion, dilation) at the Binarization and Marker Extraction (BME) (9);

marker representatives, i.e., coordinates of a unique point/group of points per said marker, are defined via either performing autocorrelation analysis of these markers, extraction of the centroids of their associated Voronoi regions, detection of their centers of gravity using geometric priors on the marker shape as penalty terms (similarly to ones used in the projection on convex set estimation method [23]) or without application any penalty term. As a result, the sought estimates of these coordinates (13) of a set of points located in the nodes of a periodic grid are obtained at the output of the Extraction of Markers' Representatives (EMR) (11); robust matching of the markers representatives' coordinates extracted off-line from template/reference data (12) vs. (13) is accomplished in a robust way (using, for example, the RANSAC [24] algorithm) in order to obtain an estimate ($\hat{T}$(.)) of the sought transformation operator (T(.)) in the Geometric Transform Estimation (GTE) block (14);

finally, the high quality graphic authentication code secure element extracted in the predefined coordinates (16) is obtained by application of the transformation operator **inv** ($\hat{T}$(.)), where **inv**(.) states for operator inversion at the Geometric Transform Compensation (GTC) (15).

A comparison of the synchronization accuracy provided by alignment that is using Zxing [20] library and detection of corners [13] vs. the proposed embodiment is presented in Fig. 4.

An example of acquired graphic authentication code relevant data (1) integrated into a body of a 2D QR code is shown in (17). The aligned version of the graphic authentication code secure element (18) demonstrates that use of special points does not allow cope with distortions that are met in authentication of brands and products based on secure graphics (as indicated by an external rectangle located around the graphic authentication code secure element).

Simultaneously, the synchronization strategy proposed in this embodiment provides a significantly higher precision even with respect to this intuitive visual performance measure (19).

**Non-stationarity of the print and scan channel.** As it was indicated earlier in consideration of the Background of the Invention of this disclosure, current models applied to simulate the print and scale channel are oversimplified and do not consider their input dependence and non-stationary character.

Fig. 5 contains a counterexample that demonstrates that the behavior of the channel is considerably more involved. In particular, the Figure contains a fragment of the graphic authentication code secure element (20) and its corresponding aligned printed and scanned version (21). Three fragments of interest were selected in both (20) and (21) to invalidate the stationary consideration of the channel: uniformly printed (22), containing several transitions (23), and encompassing a part of the substrate only (24).

The fragments from (21) were binarized via comparison of luminances of their elements/pixels to the threshold computed based on the analysis of their empirical distribution/histogram. In what follows, probabilities of bit flipping Pb were computed in every of the regions considering (21) as the channel output generated from (20) that is acting as its input. The obtained results (Pb=0.07 for (22); Pb=0.03 for (24); Pb=0.57 in (23)) confirm time varying print and scan channel characteristics that justify its non-stationarity [21].

In order to cope with channel non-stationarity without significant increase in computational complexity, a block-based analysis of the secure graphics is performed in the scope of this disclosure under a hypothesis of block-wise data stationarity that has been proven valid and accurate in various imaging applications [25, 26]. In particular, the graphic authentication code secure element data (3) are treated as block-wise wide stationary [21]. Such an approach allows perform block ranking and selection of those ones that are more informative/less degraded by the print and scan channel that significantly impacts the decision-making provided that only informative features are exploited at this stage.

In order to further optimize the disclosed system performance, time-frequency analysis (using discrete wavelet [27], non-decimated wavelet [28], wave packets [29], curvelet [30], beamlet [31], ridgelet [32], steerable pyramids [33] decompositions are accomplished based on the corresponding filter bank(s) and following a certain decomposition structure) are used in order to address approximately optimal decision-making in non-stationary, varying channels. The application of the decompositions is performed during system training that allows select the most efficient/accurate one and to use it in verification. The particularities of the training stage are presented in the description of Fig. 7 and Fig. 8 as well as detailed later in this disclosure.

**Distance functions** such as L2 and L1 metrics or cross-correlation that are widely used in digital communications [34, 35], image processing [36, 37], lossy image compression [26], machine learning [38] and other relevant domains, are usually deployed to compare only perfectly aligned vectors. Moreover, their application to geometrically distorted data is questionable and was subject to a separate research in image processing and data hiding [39]. In the case of authentication of brands and products based on secure graphics, this assumption is violated due to various distortions that include object shape deformations, geometric misalignment, blur, lightening changes, etc. Additionally, some experiments performed in the domain of image retrieval [40] demonstrate that these distances are lacking discrimination that is of special importance when targeting errorless separation of originals graphic authentication code and their lookalike copies.

In order to address the issue of robustness improvement of the decision-making rule, as well as to improve the overall discriminative power of the authentication, a cross-bin distance (such as Earth Mover's Distance (EMD), EMD variant (EMDV), approximated EMD (EMD), tangent EMD, EMD under transformation set, Diffusion Distance, etc.) is used. In this disclosure, the exploited distance is referred to as EMD. The main difference between this distance that is based on the famous transportation problem [16] and distances that are commonly used in the domain of authenticity protection (as L1, L2 or cross-correlation) is that, instead of point wise analysis of aligned data vectors, it operates over a considerably larger set of alignments of features extracted from the vectors/robust hashes computed based on the vectors and performs minimization of the cost of transformation of one feature vector/hash vector into another one.

More formally, the EMD is defined as follows.

Given two sets of robust hashes/extracted features $P = \{(p_{1,1}), ..., (p_M, w_{p_M})\}$ and $Q = \{(q_1, w_{q1}), ..., (q_N, w_{qN})\}$ composed of M and N tuples, respectively, the EMD is determined as a solution of the following transportation problem. The elements in $P$ ($Q$) are treated as "supplies" ("demands") located in $w_{pi}$ ($w_{qi}$). The amounts of local demand (supply) are denoted by $p_i$ ($q_i$). Let $F_{ij}$ represent the amount of weight moved from $p_i$ to $q_j$. The total cost of matching and Q is defined as:

$$EMD(P;Q) = \min_{\{F_{ij}\}} \frac{COST^D(P;Q)}{\sum_{i=1}^{N}\sum_{j=1}^{M}F_{i,j}}, \; such \; that \quad (1)$$

$$COST^D(P;Q) = \sum_{i=1}^{N}\sum_{j=1}^{M}F_{i,j}D_{i,j}, \quad\quad (2)$$

$$\sum_j F_{i,j} = p_i \quad\quad\quad (3)$$

$$\sum_i F_{i,j} = q_j \qquad\qquad (4)$$

$$\sum_{i,j} F_{i,j} = \sum_i p_i = \sum_j q_j = 1 \qquad\qquad (5)$$

$$F_{i,j} \geq 0, \qquad\qquad (6)$$

where $D_{ij}$ is the distance between $p_i$ and $q_j$, the so-called ground distance (the Euclidian distance in the scope of this disclosure). The EMD is a many-to-many matching method oppositely to one-to-one match used by the criticized approaches as it is shown in Fig. 6. If the ground distance is a metric, that is the case for the Euclidian distance, and the total demand and total supply are equal, that is, $\sum_i 1^{w}_{pi} = \sum_{j=1} w_{qj}$, the EMD is a metric too.

A schematic representation of classical feature extraction vs. the one that is based on cross-bin-based similarity computation for aligned vectors (25) and (26) is presented in Fig. 6 (where individual circles represent elements of the vectors).

Since one of the overall targets of the match is to achieve minimum possible variation of the features within every class alongside with maximization of the mean interclass distances (for instance measuring the F-score from machine learning [41]), it is very easy to show that performance of the former approach equals or is inferior to the latter one. The reason is that in the former case the search space defined in the above min-max optimization problem is represented by a subset of the set exploited by cross-bin-distance-based techniques.

In the scope of the current disclosure, the system of authentication of brands and products using secure graphics and cross-bin distances in all its embodiments (Fig. 10-12) operates in two possible modes: **training** and **testing.**

An embodiment for the training of the decision-making of the proposed system of authentication of brands and products based on secure graphics using cross-bin distances is described in Fig 7 and Fig. 8. In the scope of this embodiment, the main goal of the training is to optimize the decision making in order to minimize the probability of any of the following events: (a) an original is attributed to the class of copies; (b) a copy is assigned to the class of originals; (c) a joint probability of events in (a) and (b), that are measured either on average or in a max sense.

To achieve this goal, the following sequence of operations should be successfully executed:

Initialization (27) (Fig. 7): during this operation the parameters that define the optimal performance of the decision-making are initialized by zeros/empty sets or corresponding appropriate values. These parameters are:

- (28) - Type of cross-validation (TCV), i.e., one of leave-one-out cross-validation, leave-p-out cross-validation, k-fold cross-validation, repeated random subsampling cross-validation;
- (30) - information on the frequency content of the reference/template (TF), while OTF designates the optimal value of the TF;
- (32) - type of image block decomposition (random or deterministic) as well as block size/range of block sizes (DT/BS), while ODT/OBS designates the optimal value of the DT/BS;
- (34) - filter banks (FB), while OFB designates the optimal value of the FB;
- (36) - Number of decomposition levels of the applied transformation (NDL), while ONDL designates the optimal value of the NDL;
- (38) - information on the length of the extracted hash/histogram (NHB), while ONHB designates the optimal value of the NHB;
- (46) - coordinates of the informative blocks (IB) that provide the best decision making performance, while OIB designates the optimal value of the IB;
- (47) - parameters of the decision maker (PDM) such as type of classifier/decoder, codebook, decision making threshold, kernel type, batch size, learning rate, shrinking heuristic, class weights, decision boundary, number of support vectors, intercept, codebook, as possible examples, while OPDM designates the optimal values of the PDM;
- The same time, the worst possible value (one) is initially assigned to the probability of incorrect decision Pe (48);
- Auxiliary iteration counters h (29), i (31), j (33), k (35), 1 (37) are initialized by ones.

Simultaneously, the ranges for the aforementioned parameters are defined in terms of the corresponding valid sets:

- Set of TFs (STF) that includes a range of decompositions that define time-frequency content of the reference/template;

- Set of DT/BSs (DTS/BSS);
- Set of FBs (FBS);
- Set of NDLs (NDLS);
- Set of NHBs (NHBS).

The available data of a validated quality (a training set) ideally composed of the a priori acquired graphic authentication code secure elements (3) that protect authenticity of genuine items as well as obtained from copies are labeled (40) accordingly as positive and negative examples. In what follows, the labeled data are aligned (41) to the predefined coordinates using appropriate synchronization that receives as a reference information concerning alignment coordinates (12) that are deduced from the reference data/template (Fig. 2).

Simultaneously, the graphic authentication code secure element (3) of the template is optimized (39) in terms of its global time-frequency content using the information that is contained in the TF (30).

After completion of the Initialization (27) and alignment (41) stages, the following iterative procedure is launched. For every TF (30) from STF, DT/BS (32) from DTS/BSS, FB (34) from FBS, NDL (36) from NDLS, NHB (38) from NHBS, for the given TCV (28), and every graphic authentication code secure element (3) from the training set do (Fig. 8):

- divide the graphic authentication code secure element of a test image and of a template (39) into a collection of overlapping/non-overlapping blocks of the given size/range of sizes, following either random or deterministic splitting strategy according to the DT/BS (32);
- apply an NDL (36)-level transform (42) specified by the FB (34) to every said image and template blocks,
- compute a hash/extract characteristics (43) from the transformed image and template blocks according to the NHB (38);
- extract the features applying cross-bin strategy in (44) according to equations (1) - (6);
- perform decision-making (45) using the calculated features of the data from the training set that is implemented using a support vector machine (SVM) with either a linear kernel, or a polynomial kernel, or a sigmoid kernel, or a Gaussian RBF kernel, or any their combination; a deep learning, random forests, decision trees, bagged trees, neural networks, or any other suitable supervised binary classification framework; minimum distance decoder, generalized minimum distance decoder, lattice-based decoder, iterative decoder with corresponding codebooks, and compute the probability of the incorrect decision Pe' (48) for the given values of the PDM (47). This process is iterative and is repeated for every possible combination of features that are extracted from the blocks obtained for the given DT/BS (32) value. At the end of this process the best block configuration IB (46) is selected that corresponds to the smallest Pe' or using any appropriate feature selection strategy used in machine learning such as F-score [41];
- if Pe'< Pe, perform the following assignments (50):

        ODT/OBS = DT/BS;
        OWF = WF;
        OND = ND;
        OTF = TF;
        OHD = HD;
        OPDM = PDM;
        OIB = IB;
        Pe = Pe';

Pass to the next iteration (49).

At the end of the last iteration that corresponds to h= | TFS | (29) sent to the verification device/comparator (51) and to the following assignments of other auxiliary counter variables:

        i = IDTS/BSSI;
        j = | WFS |;
        k = | NDLS |;
        l = | SNHB |,

ODT/OBS, OWF, OND, OTF, OHD, OIB as well as the decision maker optimal inherent parameters OPDM constitute the output of the training stage (52) and are made accessible and available when is needed to the system embodiments explained in Fig. 10 - Fig. 12. It is important to note that the OTF contains information only about the blocks indicated by the OIB.

After completion of the system training, it is considered operational and ready for exploitation.

The main goal of the system of authentication of brands and products based on secure graphics and cross-bin distances is to perform accurate **verification** (Fig. 9), i.e., errorless discrimination between original graphic authentication code secure elements (3) and lookalike copies generated based on the elements.

It is assumed in the scope of this disclosure that at the beginning of the verification stage the data relevant to the graphic authentication code are successfully acquired by the camera of the customer's portable device and their quality is successfully validated either by the remote server (Fig. 10) or on the device (Fig. 11 and Fig. 12). The detail on actions that follow quality invalidation is present in descriptions of Fig. 10 - Fig. 12 of this disclosure.

The acquired validated data are transferred to the alignment (41) where these data are synchronized using reference information concerning alignment coordinates (12) that is a priori deduced from the reference data/template (Fig. 2). The output of the alignment, the high quality graphic authentication code secure element (3) extracted from the graphic authentication code relevant data (1) in predefined coordinates, is used as an input to the necessary processing and feature extraction. Using the available outputs of the system training (Fig. 7 and Fig. 8) and provided that ODT/OBS, OFB, OND, OTH, OFT, ODM, OPDM, OIB are determined (52), the following operations are performed in order to extract informative graphic authentication code features/compute the corresponding hash:

- an image of the graphic authentication code secure element (3) is split into blocks in a way that is specified by the ODT/OBS;
- the ONDL block wise transformation (42) using the OFB filters is performed on every of the OIB blocks extracted from the decomposed data;
- hash calculations/characteristics' extraction (43) is accomplished using information supplied in the ONHB and OTF;
- features are extracted from the output of the previous operation and the corresponding data available in the OTF using the cross-bin distance strategy in the EMD block (44) according to equations (1) - (6);
- finally, the verdict (53) about authenticity confirmation (Original)/rejection (Copy) is generated by the decision maker (45) that is governed by the OPDM. The verdict is considered as the input for the message that should be sent to the customer. The message generation, transmission and activation is detailed in description of Fig. 10 - Fig. 12.

According to this disclosure, the following embodiments for the system of authentication of brands and products using secure graphics and cross-based distances are foreseen.

In the scope of the first one presented in Fig. 10, it is assumed that all involved data processing and manipulations are performed on the remote secure server.

The role of the portable device (55) is to perform acquisition of the graphic authentication code relevant data (1), their communication to the server (56) and visualization of a message sent by the server to the customer that contains either authenticity confirmation/rejection information or a request to repeat acquisition due to insufficient quality of the previous one. The message might also enclose information about potential penalty actions that will be taken in ultimate cases described below.

The graphic authentication code relevant data (1) is conferred to an item or a group of items (54) and is incorporated into its/their surface(s) or into its/their associated packaging, label, or certificate via printing. In the scope of this embodiment, the acquisition is performed by means of a camera embedded in a portable device (55) in any of the following modes:

- still photo at any resolution between 6 Megapixels to 32 Megapixels or to the upper resolution limit provided by the mobile market (that currently equals to 41 Megapixels), where every pixel is represented at any of 8 bit, 12 bit, 16 bit, 24 bit color depth or at any maximal color depth available;
- burst mode at any resolution between 6 Megapixels to 32 Megapixels or to the upper resolution limit provided by the mobile market (that currently equals to 41 Megapixels), where every pixel is represented at any of 8 bit, 12 bit, 16 bit, 24 bit color depth or at any maximal depth available;
- video mode at any resolution provided by VGA (640x480 pixels), HD (1280x720 pixels), FullHD (1920×1080 pixels), UHD (3840x2160 pixels) or at any upper resolution limit provided by the mobile market (that currently equals to 41 Megapixels), where every pixel is represented at any of 8 bit, 12 bit, 16 bit, 24 bit color depth or at any maximal color depth available.

As a part of the authentication request that as well includes information about the portable device (such as its phone number, localization data as possible examples), the acquired data are transferred to the secure server (56) connected to the secured storage/database (57).

It is important to note that two possible variants are foreseen in the scope of this disclosure concerning the workflow that is operated on the portable device. According to the first one, no preinstalled specialized mobile application is necessary to acquire the graphic authentication code relevant data and the standard camera application that is provided by the manufacturer of the portable device alongside with the device operating system is exploited. According to the second one, a prior installation of such an application will be required.

The authentication request transmission is performed using any appropriate messaging protocol, i.e., via MMS, WLAN, WAP, I-MODE as possible examples over GSM, TDMA, CDMA, UMTC networks or any appropriate communication infrastructure. The server (56) will extract the data relevant to the graphic authentication code and validate its quality on the presence of artifacts that might impact system performance in terms of accuracy of the made decision. Such artifacts include but are not limited to incomplete capture of the graphic authentication code relevant data (1), inappropriate level of detail containing in the acquired data, presence of a certain class of distortions that might be introduced during either enrollment/printing or acquisition that impact the information content used in decision making (such as deformations of time-frequency characteristics globally or in certain time-frequency bands or physical degradations of the substrate, etc.) Upon the results of the quality assessment, two scenarios are possible.

If the quality unsatisfactory due to artifacts and distortions that are introduced in the course of enrollment, production or acquisition, the server (56) compiles and sends to the customer a request to repeat acquisition with some detail on what is expected (for instance, the customer is invited to keep the distance between the item's graphic authentication code relevant data (1) and the used camera not larger/smaller than pre-defined limits). The request transmission is accomplished using an SMS, MMS, WLAN, WAP, I-MODE as possible examples over GSM, TDMA, CDMA, UMTC networks or any appropriate communication infrastructure.

The message activation on the portable device (55) is performed using a text composed of alphanumeric characters or using a visual format. In both cases, the information is visualized on the display of the portable device (55). Another possibility consists in its diffusion via its embedded speakers in the form of an audio signal.

If the customer has already performed a given number of acquisition trials and the quality assessment still remains unsuccessful, the server (56) will decide that a malicious attempt to deteriorate its performance by either learning the margin between the genuine items and fakes/copies or via a denial-of-service is performed. In this case the customer portable device (55) credentials will be denied and blacklisted and the customer might be informed about the taken penalty actions. The corresponding information will be stored in the secure database (57).

After the quality validation stage is successfully terminated, the graphic authentication code relevant data (1) is transferred to the necessary processing chain that includes synchronization/ alignment, eventual error correction decoding that are followed by feature extraction.

The extracted features/generated hash will be produced based on aligned graphic authentication code secure element (3) exploiting the information on the reference/template that is obtained from/with a help of the secured database (57) that might either directly supply the information or provide the data that are used as one of inputs for the reference generation on the server on-line and using the cross-bin computation strategy (Fig. 6). As possible cases in the latter scenario, one might consider information about relevant frequency bands that is exploited alongside with or independently of identification code/serial number and a cryptographic primitive/generator of random numbers to produce the graphic authentication code secure element (3). It is supposed that the necessary training has been already performed before the end of the quality assessment stage and that the explicit characteristics of the classes of originals and copies as well as reference-relevant data and classifier-relevant information that minimize the probability of any of the following events: (a) an original is attributed to the class of copies; (b) a copy is assigned to the class of originals; (c) an average probability of events in (a) and (b) that is measured either on average or in a max sense, are made available. The detail of the training of decision-making is present above in description of Fig. 7 and Fig. 8.

Finally, the decision-making is carried out. Depending of its result, the customer is informed by the server (56) if the item (54) authenticity was confirmed or rejected. For this purpose, a message is generated by the server (56) and transferred to the customer's portable device (55) using any of SMS, MMS, WLAN, WAP, I-MODE as possible examples over GSM, TDMA, CDMA, UMTC networks or any appropriate communication infrastructure. Upon reception, the message is rendered to the customer in any suitable form (visual as a text message or image shown on the device display or audio as an audio signal diffused via the device (55) speakers, as possible examples).

According to the second embodiment of the system for authentication of brands and products using secure graphics and cross-bin distances (Fig. 11) one assumes that a part or entire chain of the involved data processing and manipulations is performed on the portable device. Then, the eventual remaining part of this processing chain and decision-making are delegated to the secure server.

In this scenario, the role of the portable device (55) includes not only acquisition of the graphic authentication code-relevant data (1), their communication to the server and visualization of the message sent by the server to the customer that contains authenticity confirmation/rejection information (Fig. 10). Additionally, it performs the entire or partial sequence of data processing operations enclosed between quality assessment and feature extraction/hashing and error correction.

Evidently, such a scenario will indispensably require installation of the specialized mobile application on the customer's portable device that is able to perform these operations.

In the scope of this embodiment, the acquisition of the graphic authentication code relevant data (1) is performed by means of a camera embedded in a portable device (56) in any of the following modes:

- still photo at any resolution between 6 Megapixels to 32 Megapixels or to the upper resolution limit provided by the mobile market (that currently equals to 41 Megapixels), where every pixel is represented at any of 8 bit, 12 bit, 16 bit, 24 bit color depth or at any maximal color depth available; burst mode at any resolution between 6 Megapixels to 32 Megapixels or to the upper resolution limit provided by the mobile market (that currently equals to 41 Megapixels), where every pixel is represented at any of 8 bit, 12 bit, 16 bit, 24 bit color depth or at any maximal depth available;
- video mode at any resolution provided by VGA (640x480 pixels), HD (1280x720 pixels), FullHD (1920×1080 pixels), UHD (3840x2160 pixels) or at any upper resolution limit provided by the mobile market (that currently equals to 41 Megapixels), where every pixel is represented at any of 8 bit, 12 bit, 16 bit, 24 bit color depth or at any maximal color depth available.

After the graphic authentication code relevant data (1) are acquired, the portable device (55) performs assessment of their quality on the presence of artifacts that might impact systems performance in terms of accuracy of the made decision using the installed specialized application. Such artifacts include but are not limited to incomplete capture of the graphic authentication code, inappropriate level of detail containing in the acquired data, certain class of distortions that might be introduced during either enrollment/printing or acquisition that impact the information content used in decision making (such as deformations of time-frequency characteristics globally or in certain time-frequency bands or physical degradations of the exploited substrate), etc. Upon the results of the quality assessment, two scenarios are possible.

If the quality was found unsatisfactory due to the presence of the abovementioned artifacts and distortions that were introduced during enrollment, production or acquisition, the specialized application generates and activates to the customer a request to repeat acquisition with some detail on what is expected (for instance, the customer is invited to keep the distance between the item's graphic authentication code and the used camera not larger/smaller than predefined limits). The activation is performed using a text composed of alphanumeric characters or using an image. In both cases, the information is visualized on the display of the portable device (55). Another possibility consists in the message diffusion via the device speakers in the form of an audio signal.

If the customer has performed a given number of trials and the quality assessment still remains unsuccessful, the specialized application decides that a malicious attempt to deteriorate its performance by either learning the margin between the genuine items and fakes/copies or via a denial-of-service. In what follows, the specialized application will communicate to the remote server (56) credentials of the customer portable device (55) using any of an SMS, MMS, WLAN, WAP, I-MODE sent over GSM, TDMA, CDMA, UMTC networks or any appropriate communication infrastructure in order to deny and blacklist the device. The corresponding information will be stored in the secure database (57). The customer might be as well informed about the taken penalty actions.

After quality validation stage is successfully terminated, the graphic authentication code relevant data (1) is passed to the necessary processing chain/its part that should be accomplished on the portable device (55). The inherent processing could include either an empty set (all the remaining operations are performed remotely on the secure server), only synchronization or synchronization and feature extraction/hashing with or without error correction.

Operations that are carried out by the specialized application installed on the portable device (55) define the information content of the authenticity verification/ rejection request that will be generated by this application and sent to the secure server (56) using an SMS, MMS, WLAN, WAP, I-MODE as possible examples over GSM, TDMA, CDMA, UMTC networks or any appropriate communication infrastructure. This information might include a synchronized image of the graphic authentication code relevant data (1), or the graphic authentication code secure element (3) with eventually corrected errors, or extracted features/hash values. In the latter case, auxiliary inputs required to perform feature extraction, that are relevant to the training of the decision-making (52), should include frequency information of the reference data, number of decomposition levels performed to transform the graphic authentication code secure element, type of filters used, type of image spitting into blocks and block size, length of the features/robust hash.

After the processing chain allocated to the portable device (55) is successfully terminated, the specialized application will generate an authenticity confirmation/ rejection request that will contain the output of the described above processing chain in a form of a synchronized graphic authentication code image, a graphic authentication code secure element, or extracted features/hash values in any appropriate format (using alphanumeric characters or any image format) as well as some information about the portable device (such as its phone number and localization data as possible examples). The request will be transferred to the secure server (56) using an SMS, MMS, WLAN, WAP, I-MODE as possible examples over GSM, TDMA, CDMA, UMTC networks or any appropriate communication infrastructure.

Upon reception by the server (56), the output of the processing generated on the portable device is either passed to the remaining processing chain that includes any subset of synchronization, eventual error correction, and feature extraction/hash generation or is directly transferred to the decision-making.

It should be noted that the extracted features/generated hash will be produced based on aligned graphic authentication code secure element (3) exploiting the information on the reference/template that is obtained from/with a help of the secured database (57) that might either directly supply the information or provide data that are used as one of inputs for the reference generation on the server on-line and using the cross-bin computation strategy (Fig. 6). As possible cases in the latter scenario, one might consider information about relevant frequency bands that is exploited alongside with or independently of identification code/serial number and a cryptographic primitive/generator of random numbers to produce the graphic authentication code secure element (3). It is supposed that the necessary training has been already performed prior to the end of the quality assessment stage and that the explicit characteristics of the classes of originals and copies as well as reference-relevant data and classifier-relevant information that minimize the probability of any of the following events are available: (a) an original is attributed to the class of copies; (b) a copy is assigned to the class of originals; (c) an average probability of events in (a) and (b) that is measured either on average or in a max sense. The detail of the training of decision-making is present in description of Fig. 7 and Fig. 8.

Lastly, the decision-making is accomplished based on all available necessary data. Depending of the obtained result, the customer is informed by the server (56) if the item (54) authenticity was confirmed or rejected. For this purpose, a message is generated by the server (56) and is transferred to the customer's portable device (55) using an SMS, MMS, WLAN, WAP, I-MODE as possible examples over GSM, TDMA, CDMA, UMTC networks or any appropriate communication infrastructure. Upon reception, the message is rendered to the customer in any suitable form (visual as a text message or image on the device (55) display or audio as an audio signal diffused via its embedded speakers as possible examples).

According to the third embodiment for the proposed system of authentication of brands and products based on secure graphics using cross-bin distances (Fig. 12) all involved data processing and manipulations are performed on the portable device. In this case, one assumes that the specialized application is installed on the mentioned device and is operational.

The portable device (55) then performs the following sequence of actions using the specialized application.

Foremost, the graphic authentication code relevant data (1) are acquired using an embedded in the device (55) digital camera. In the scope of this embodiment, the acquisition is performed in any of the following modes:

- still photo at any resolution between 6 Megapixels to 32 Megapixels or to the upper resolution limit provided by the mobile market (that currently equals to 41 Megapixels), where every pixel is represented at any of 8 bit, 12 bit, 16 bit, 24 bit color depth or at any maximal color depth available;
- burst mode at any resolution between 6 Megapixels to 32 Megapixels or to the upper resolution limit provided by the mobile market (that currently equals to 41 Megapixels), where every pixel is represented at any of 8 bit, 12 bit, 16 bit, 24 bit color depth or at any maximal depth available;
- video mode at any resolution provided by VGA (640x480 pixels), HD (1280×720 pixels), FullHD (1920×1080 pixels), UHD (3840x2160 pixels) or at any upper resolution limit provided by the mobile market (that currently equals to 41 Megapixels), where every pixel is represented at any of 8 bit, 12 bit, 16 bit, 24 bit color depth or at any maximal color depth available.

In what follows, the necessary data processing manipulations are executed.

In particular, assessment of the quality of the acquired graphic authentication code relevant data (1) on the presence of artifacts that might impact system's performance in terms of accuracy of the made decision is accomplished. Such artifacts include but are not limited to incomplete capture of the graphic authentication code, inappropriate level of detail containing in the acquired data, certain class of distortions that might be introduced during either enrollment/printing or acquisition that impact the information content used in decision making (such as deformations of time-frequency characteristics globally or in certain time-frequency bands or physical degradations of the substrate, etc.) Upon the results of the quality assessment, two scenarios are possible.

If the quality was found unsatisfactory due to the presence of the abovementioned artifacts and distortions that were introduced during enrollment, production or acquisition, the specialized application generates and activates to the customer a request to repeat acquisition with some detail on what is expected (for instance, the customer is invited to keep the distance between the item's graphic authentication code and the used camera not larger/not smaller than predefined limits). The activation is performed using either a text composed of alphanumeric characters or an image. In both cases, the information is visualized on the display of the portable device (55). Another possibility consists in the message diffusion via the device (55) embedded speakers in the form of an audio signal.

If the customer has performed a given number of acquisition trials and the quality assessment still remains unsuccessful, one might suspect that either some problem has occurred during enrollment/production process or that a counterfeit case was discovered. In what follows, a corresponding report will be generated by the specialized application that will be afterwards distributed among the concerned authorities (enroller, brand owner, anti-counterfeiting agency as possible sinks).

After quality validation stage is successfully completed, the graphic authentication code relevant data (1) is transferred to the necessary processing chain that includes synchronization, eventual error-correction, and feature extraction/hash generation and will be entirely accomplished on the customer's portable device (55) as well as decision-making that follow.

Because of the off-line verification scenario that is supposed in the scope of this embodiment, any combination of auxiliary information elements that include relevant frequency content of the reference data, number of decomposition levels used to transform the graphic authentication code secure element, type of wavelet filters used, type of image spitting into blocks and a block size, a number of bins in a histogram are available to the specialized application installed on the portable device. The combination is determined by the training output (52) of the system (Fig. 7 and Fig. 8).

Feature-extraction is performed based on the extracted features/generated hash values and reference data using a cross-bin strategy (Fig. 6). The reference data are either directly stored on the portable device (55) or are generated on the device using the following inputs: information on the relevant frequency bands that is exploited alongside with/without identification code/serial number, and a cryptographic primitive/random number generator used to produce the graphic authentication code secure element. It is supposed that the necessary training has been successfully completed at most at the end of quality assessment and that the explicit characteristics of the classes of originals and copies as well as reference data and classifier-relevant information that minimize the probability of any of the following events are available: (a) an original is attributed to the class of copies; (b) a copy is assigned to the class of originals; (c) an average probability of events in (a) and (b) that is measured either on average or in a max sense. The detail of the training of decision-making is present in Fig. 7 and Fig. 8.

As in the case of two previous embodiments, the decision-making concludes the system operational workflow by generating its verdict on the item (54) authenticity. Depending of the verdict, the customer is informed by the specialized application if the authenticity was confirmed or rejected. For this purpose, a message is generated by the application and is rendered to the customer in any suitable form (a visual as a text message or image projected on the portable device (55) display or an audio as an audio signal diffused via the device (55) embedded speakers as possible examples). The specialized application provides an additional possibility to generate a report that contains details on the performed authentication of brands and products based on secure graphics using cross-bin distances. The report content might vary depending of the interests of the concerned parties (quality control, marketing relevant data, etc.)

An example of performance of the disclosed system of brand and products authentication based on secure graphics using cross-bin distances is presented in Fig. 13.

The performance is compared to the one attained by the system disclosed in [13] for the collection of data that was obtained using HP Indigo static printing of one digital code at resolution of 812 dpi and a corresponding set of copies generated from the originals via applying the following sequence of signal processing operations: acquisition of the printed images performed by means of a camera embedded in a Smartphone (e.g. Samsung Galaxy S5) operational in full high definition video capturing mode;
application of a low pass filtering with a certain cut-off frequency, unsharp mask or magnification of high frequency of the spectrum with respect to the cut-off frequency, binarization with a certain threshold and morphological erosion that exploits a certain structural element [42] where all three parameters are optimized in order to minimize distortions between the acquired printed image and finalized forgery. The goodness of fit might be measured by visual similarity, Watson metric, just noticeable difference, peak-signal-to-noise-ratio, signal-to-noise-ratio, mean squared error, mutual information as possible examples or by any other appropriate objective or subjective quality metric [22] that is found useful;
the forgery generation is finalized by printing the output of the processing operations using the given printed technology (offset printing at 2540 dpi) with consequent scanning/acquisition of the print by the camera of a Smartphone (e.g. Samsung Galaxy S5) operational in full high definition video capturing mode.

Some examples of the original graphic authentication code relevant data (1) and the corresponding copies are made available in Fig. 13,a,c and 13,b,d, respectively.

The examples demonstrate that the class of original graphic authentication code secure elements (3) possesses a considerable inherent variability. Secondly, it is demonstrated that the strategy of copy fabrication is able to produce good quality replications of the original graphic authentication code secure elements (3).

Finally, Fig. 13,e and Fig. 13,g contain preliminary qualitative comparison of separation of a set of original secure graphics vs. the corresponding set of copies. Both sets are composed of 14 images each. The separation is performed using the system uncovered in [13] (Fig. 13,e) vs. the current invention (Fig. 13,g). The obtained results demonstrate that due to the imperfections inherent to printing and scanning that are in detail discussed in the body of this disclosure, the system revealed in [13] does not provide reliable separation between the originals and copies. Contrarily, the disclosed system provides an easy way to errorlessly assign every image in the considered test set either to the class of originals or to the class of copies using simple linear separation (dashed lines are used to schematically represent the linear SVM margin while the solid line in between indicates its separation hyperplane [43]).

In the case, the disclosed system of authentication of brands and products based on secure graphics using cross-bin distances does not produce sufficiently accurate results, it is foreseen in the scope of this invention to perform information fusion.

Under information fusion one should understand combination of all available informative signals/ modalities at any of the following levels: sensor level, data processing, feature level, and decision level.

At the sensor level, various channels (visual light, ultraviolet, infrared, physical properties of the printing substance/substrate as possible examples) are exploited in order to enrich the informative content of the item (54) protected using secure graphics (Fig. 14). For this purpose the customer's portable device (55) should have the technical means that permit acquisition of data using the a priori installed specialized application at the outputs of the corresponding channels: of the visual light (64), of the infrared light (65), of the ultraviolet light (66), measuring physical properties of the printing substance/substrate (67). As such means one could imagine an infrared or ultraviolet cameras [44] that already exist and serve for military purposes.

In the case the fusion is performed at the sensor level (here (Fig. 15) and hereafter examples of fusing two signals are considered that however easily extend to integration of more modalities), the available extracted signals, captured by a camera sensitive to visual light (64) and by an infrared camera (65), of a successfully validated quality and aligned accordingly, that represent the protected item using complementary information, are combined together in (68) in order to provide a unique descriptor that will be used by the specialized application to generate the authentication confirmation/ rejection request.

Sensor level fusion might be performed at the signal level (using weighted averaging [45] that might be applied directly or in a certain transform domain [46], using Bayesian probabilistic framework [47] or Kalman filtering [48]) or at the pixel level using either pixel-by-pixel or strategy or by combining data from associated local neighborhoods (using logical filtering [49], methods from mathematical morphology [50], or simulated annealing [51]) targeting maximization of the overall precision of the disclosed system.

The entire processing that follows generation of such a descriptor should be adapted to the content of the output produced by (68) at both data processing (69) and feature extraction (70) and decision-making (71).

In the case, the fusion is performed at the data processing level (Fig. 16), the outputs of individual data processing operations (74) and (75) are first accomplished using one/group of techniques presented above in description of the sensor layer fusion. The technique/group of techniques is/are applied either independently (the switches (72) and (73) are open) or dependently (the switches (72) and (73) are closed) or in a partially dependent manner (one of the switches (72) and (73) is open and another one is closed) are integrated into a complete command using any algorithmic sequence of mathematic operations or groups of the operations that are targeting maximization of the overall precision of the disclosed system. The command produced by (76) is further exploited for feature extraction (77) and decision-making (78) that are optimized according to its properties. Practical implementation of fusion (76) at this level follows strategies that are similar to the ones suitable to signal integration at the sensor level.

If the fusion is accomplished at the feature level (Fig. 17), the corresponding features (81) and (82) are extracted either independently (the switches (79) and (80) are open) or dependently (the switches (79) and (80) are closed) or in a partially dependent manner (one of the switches (79) and (80) is open and another one is closed) based on processing outputs (74) and (75) of the complementary signals (64) and (65) and are combined together. The outputs are obtained for various positioning of switches (72) and (73) that was discussed in the case of data-processing level fusion. The final state of the switches (either open or closed) is defined by the maximizing system performance, for instance, via minimizing Pe (48).

As possible strategies for fusion of extracted features one could apply is direct concatenation of individual features extracted from complementary signals and normalized properly for the sake of integration. An alternative approach might be considered if the features are extracted in certain domains (as binary vectors, as floating-point precision coefficient obtained in a certain transform domain) one should apply an algorithmic sequence of mathematic operations or groups of the operations that are achieving maximization of the overall precision of the disclosed system (for instance, in terms of the minimum of the probability of incorrect authentication).

The output of the fusion (83) is further transferred to the decision-making (84) that is optimized accordingly.

In the scope of the embodiment disclosed in Fig. 18, fusion is performed at the decision-making level. The final verdict (89) is obtained by combining individual assignments (87) and (88). The assignments are produced from (81) and (82) either independently (the switches (85) and (86) are open) or dependently (the switches (85) and (86) are closed) or in a partially dependent manner (one of the switches (85) and (86) is open and another one is closed).

It is important to underline that the assignments (87) and (88) are generated assuming different state of the switches (72), (73) and (79), (80). The final configuration of the switches (open or closed) is defined by the attainable system performance [15] using Pe as possible criterion.

This version of information fusion is closely related to the fusion of classifiers that might be performed using one of possible combinations of strategies accomplished individually or in ensembles: adaptive boosting or AdaBoost [52], Bagging [53], Majority voting [54], Weighted Majority voting [55], Borda count [56], Dempster-Shafer theory of evidence [57, 58], Behavior-Knowledge Space method [59, 60].

*List of REFERENCES*

1. J. Picard, Z. Sagan, A. Foucou, and J.-P. Massicot, Method and device for authenticating geometrical codes, Patent US 20110259962 A1, 2011.

2. R.P. Sansone, Method for Reading Electronic Tickets, U.S. Pat. No. 6,454,174, 2002.

3. Z. Sagan, A. Foucou, and J.-P. Massicot, Methods and devices for marking and authenticating a product by a consumer, US 20130200144 A1, 2013.

4. K. Turner, and R. Delaney, System and method for extracting triggered data from a variable data string and embedding the triggered data into a secure barcode, WO 2015134354 A1, 2015.

5. T. Tiller and X. Marguerettaz, Low-gloss ink-jet ink, US 7735988 B2, 2010.

6. A. Markman, B. Javidi, and M. Tehranipoor, "Photon-counting security tagging and verification using optically encoded QR codes", IEEE Photon. J. 6, 6800609, 2013.

7. S. Voloshynovskiy, O. Koval, and T. Pun, Brand protection and product autentication using portable devices US 20080002882 A1, 2008.

8. F. Deguillaume, S. Voloshynovskiy, and T. Pun, Secure hybrid robust watermarking resistant against tampering and copy-attack, US 20030070075 A1, 2003.

9. J. Picard, Z. Sagan, A. Foucou, and J.-P. Massicot, Method and device for authenticating geometrical codes US 20110259962 A1, 2009.

10. A.T. Phan Ho, B.A. Hoang Mai, W. Sawaya, and P. Bas, "Authentification par codes graphiques: optimisation du canal d'impression-acquisition", GRESTI, Sep 2015, Lyon, France. Actes du Colloque GRETSI pp.4, 2015.

11. T. Kalker, J. P. Linnartz, and M. van Dijk, "Watermark estimation through detector analysis", in Proc. ICIP, vol. 1, pp. 425-429, Chicago, IL, 1998.

12. C. Baras and F. Cayre, "2D Bar-Codes for Authentication: A Security Approach", Proc. EUSIPCO'12, Aug. 2012, Bucharest, Romania.

13. J. Picard and P. Landry, "Two dimensional barcode and method of authentication of such barcode", WIPO Patent Application WO/2015/067725, 2013.

14. O. Koval, S. Voloshynovskiy, and F. Farhadzadeh, "Identification In Desynchronization Channels," in Proc. IEEE ITW, Paraty, Brazil, 2011.

15. T.M. Cover and J.A. Thomas, Elements of information theory Wiley-Interscience New York, NY, USA, 1991

16. L. Kantorovitch, On the translocation of masses, MS, 1958.

17. Y. Rubner, C. Tomasi, and L.J. Guibas, "The earth mover's distance as a metric for image retrieval", International J. of Comp. Vision 40(2), 2000.

18. ISO/IEC STANDARD 18004 Information technology - Automatic identification and data capture techniques - Bar code symbology - QR Code, 2000.

19. M.E. Mortenson, Geometric Transformations, Industrial Press Inc., 1995.

20. http://github.com/zxing/zxing/

21. G. Lindgren, Stationary Stochastic Processes: Theory and Applications, Chapman and Hall/CRC, 2012.

22. K.-H. Thung and P. Raveendran, "A survey of image quality measures",in Proc. of TECHPOS, pp. 1-4, 2009.

23. H.H. Bauschke and J.M. Borwein, "On projection algorithms for solving convex feasibility problems", SIAM Review, 38(3), pp. 367-426, 1996.

24. D.A. Forsyth and J. Ponce, Computer Vision, a modern approach, Prentice Hall, 2003.

25. M. K$_\perp$ vanç Mh$_\perp$ çak, I. Kozintsev, K. Ramchandran, P. Moulin, "Low-complexity image denoising based on statistical modeling of wavelet coefficients", IEEE Signal Processing Letters, Vol. 6(12), pp. 300-303, 1999.

26. S. LoPresto, K. Ramchandran and M. Orchard, "Image Coding based on Mixture Modeling of Wavelet Coefficients and a fast Estimation-Quantization Framework", in Proc. of the DCC, 1997.

27. S. Mallat, "A theory for multiresolution signal decomposition: the wavelet representation", IEEE Trans. on Pattern Recogn. and Machine Intel., Vol. 11(7), pp. 674-693, 1989.

28. R. R. Coifman and D. L. Donoho, "Translation invariant denoising," in Wavelets and Statistics, Springer Lecture Notes in Statistics 103, pp. 125-150, 1995.

29. R.R. Coifman and M.V. Wickerhauser, "Entropy-Based Algorithms for Best Basis Selection", IEEE Trans. on Information Theory, 38(2), 1992.

30. E. J. Candes, L. Demanet, Curvelets and Fourier Integral Operators, 2002.

31. D.L. Donoho, X. Huo, I. Jermyn, P. Jones, G. Lerman, O. Levi, and F. Natterer, "Beamlets and Multiscale Image Analysis, Multiscale and Multiresolution Methods", pp. 149-196, Springer, 2001.

32. E. J. Candès, "Ridgelets and their derivatives: Representation of images with edges", in Curves and Surfaces, L. L. Schumaker et al. (eds.), 1999.

33. A. Karasaridis and E. Simoncelli, "A Filter Design Technique for Steerable Pyramid Image Transforms", in Proc. of ICASSP, Atlanta GA, May 1996.

34. R. E. Blahut, Algebraic Codes for Data Transmission, Cambridge University Press, 2011.

35. X. Liu, S.C. Draper, and B. Recht, "The L1 penalized decoder and its reweighted LP", Allerton Conference, pp. 1572-1579, 2012.

36. B.K. Gunturk and Xin Li, Image Restoration: Fundamentals and Advances, CRC Press, 2012.

37. V. Agarwal, A.V. Gribok, and M.A. Abidi, "Image restoration using L1 norm penalty function", Inverse Problems in Science and Engineering, Vol. 15(8), pp. 785-809, 2007.

38. H. Zou and T. Hastie "Regularization and Variable Selection via the Elastic Net", J. of the Royal Statistical Society, Series B, pp. 301-320, 2005.

39. A. D'Angelo, Characterization and quality evaluation of geometric distortions in images with application to digital watermarking, PhD dissertation, University of Siena, Italy, 2009.

40. O. Pele, Distance Functions: Theory, Algorithms and Applications, PhD dissertation, Hebrew University, 2011.

41. Y.-W. Chen and C.-J. Lin, "Combining SVMs with various feature selection strategies", in Feature extraction, foundations and applications, Springer, 2006.

42. Nick Efford, Digital Image Processing: A Practical Introduction Using Java™, Pearson Education, 2000.

43. C. Bishop, Pattern Recognition and Machine Learning (Information Science and Statistics), Springer-Verlag New York, Inc. Seacaucus, NJ, USA, 2006.

44. http://www.androidguys.com/2011/02/02/infrared-ir-camera-android/

45. M. Pavel, J. Larimer, and A. Ahumada, "Sensor fusion for synthetic vision", in Proc. of the Society for Information Display, pp. 475-478, SPIE, 1992.

46. A. Toet, "Hierarchical image fusion", in Machine Vision and Applications, 3:1-11, 1990.

47. R. Sharma, T. Leen, and M. Pavel, "Probabilistic Image Sensor Fusion", Advances in Neural Information Processing Systems 11, pp. 824-830, 1999.

48. D. Kriegman, T.E. Binford, and T.O. Binford, "Stereo vision and navigation in buildings for mobile robots," IEEE Trans. Robot. Automat., vol. 5, no. 6, pp. 792-803, 1989.

49. P. Ajjimarangsee, "Neural network model for fusion of visible and infrared sensor outputs," in Proceedings of SPIE - The International Society for Optical Engineer- ing, pp. 153-160, 1988.

50. J.S.J. Lee, "Multiple sensor fusion based on morphological processing", in Proc. of SPIE - The International Society for Optical Engineering, pp. 94-100, 1988.

51. J. Landa and K. Scheff, "Binocular fusion using simulated annealing," in Proc. IEEE 1st Int. Conf. Neural Networks, pp. 327-334, San Diego, CA, USA, 1987.

52. Y. Freund and R. Schapire, "A Short Introduction to Boosting. Journal of Japanese Society for Artificial Intelligence", 14(5), pp. 771-780, 1999.

53. L. Breiman, "Bagging predictors", Machine Learning, 24(2), pp. 123-140, 1996.

54. L. Alexandre, A. Campihlo, M. Kamel, "On combining classifiers using sum and product rules", Pattern Recognition Letters, 22, pp. 1283-1289, 2001.

55. N. Ueda, "Optimal linear combination of neural networks for improving classification performance", IEEE Trans. Pattern Anal. Mach. Intell. Vol. 22(2), pp. 207-215, 2000.

56. M. Van Erp, L. G. Vuurpijl, and L. Schomaker "An Overview and Comparison of Voting Methods for Pattern Recognition", in Proc. of IWFHR-8, pp. 195-200, Niagara-on-the-Lake, Canada, 2002.

57. Glenn Shafer, A Mathematical Theory of Evidence. Princeton University Press, 1976.

58. A. P. Dempster, "A Generalization of Bayesian Inference", Journal of the Royal Statistical Society, 30, pp. 205-247, 1968.

59. Y. Huang and C. Suen, "A Method of Combining Multiple Experts for Recognition of Unconstrained Handwritten Numerals", IEEE Trans. on Pattern Analysis and Machine Intel., 17(1): 90-94, 1995.

60. C.Y.Suen and L.Lam, "Multiple classifier combination methodologies for different output levels", Springer-Verlag Pub., Lecture Notes in Computer Science, Vol. 1857 (J.Kittler and F.Roli Eds.), pp. 52-66, 2000.

**Claims**

1. Method of verifying the authenticity of a graphic authentication code using a decision making component of a computer program comprising:

   - extracting features from the graphic authentication code,
   - receiving reference features calculated during a training process,
   - performing a comparison of extracted and reference features, and based on that comparison,

- determining whether the secure graphic is authentic,

wherein the decision making component is configured by

- defining a template based on a printing file of an original graphic authentication code or based on a scanned image(s) of an original printed graphic authentication code,
- providing a training set comprising a plurality of scanned images of original printed said graphic authentication codes as well as/without printed copies of graphic authentication codes, said copies belonging to a class of non-authentic graphic authentication codes and said originals belonging to a class of authentic graphic authentication codes,
- performing an alignment of images of the training set with the template,
- applying an optimization process of the template using images from the training set,
- extracting features from the optimized template that enable discrimination between the class of authentic and non-authentic graphic authentication codes of the training set, the template optimization process and feature extraction process comprising iterative operations for optimization of the template and feature extraction.

2. Method according to the preceding claim wherein said optimization process is performed using a plurality of subunits of a secure graphic portion of the graphic authentication code, each subunit representing a portion of the overall surface area of said secure graphic image.

3. Method according to the preceding claim wherein the definition of subunits is based on a deterministic function of overlapping or non-overlapping surface regions.

4. Method according to claim 2, wherein the definition of subunits is based on a random or pseudo random function comprising a plurality of iterations seeking to optimize the determination of subunits, said determination seeking to determine the position, size and choice of subunits that seek to optimize discrimination between the class of authentic graphic authentication codes from the class of non-authentic graphic authentication codes.

5. Method according to any of the preceding claims wherein features extracted for the decision making component to discriminate between the class of authentic graphic authentication codes from the class of non-authentic graphic authentication codes comprises performing cross-bin distance calculations of variables employing an algorithm using an earth mover's distance (EMD) calculation method.

6. Method according to any preceding claim wherein the secure graphic comprises position synchronization marks and the performing an alignment of images with the template uses the position synchronization marks of the graphic authentication code of the image and of the template.

7. Method according to the preceding claim wherein the position synchronization marks of the graphic authentication code are positioned at a distance of less than 50 %, preferably less than 20% of a linear size of the synchronization marks of the graphic authentication code.

8. Method according to any of the preceding claims wherein the graphic authentication code comprises at least four position synchronization marks distributed around the secure graphic image.

9. Method according to the preceding claim wherein the graphic authentication code comprises at least three position synchronization marks aligned along at least two edges of the secure graphic.

10. Method according to any of the preceding claims wherein said synchronization marks are customized in terms of their color, shape, spacing, quantity and relative positioning with respect to said graphic authentication code secure element.

11. Method according to any of the preceding claims wherein synchronization is performed based on periodicity property of said synchronization marks.

12. Method according to any of the preceding claims wherein preprocessing is performed in a transform domain that is applied block wise.

13. Method according to the preceding claim wherein a pointer to data used to generate reference information is integrated as part of said graphic authentication code relevant data.

14. Method according to any of the preceding claims wherein a classification task is accomplished according to a binary decision-making strategy or to an outlier detection decision-making strategy.

15. Method of configuring a decision making component of a computer program for verifying the authenticity of a graphic authentication code comprising position synchronization marks and a secure graphic, the method comprising:

- defining a template based on a printing file of an original graphic authentication code or based on a scanned image of an original printed graphic authentication code,
- providing a training set comprising a plurality of scanned images of original printed said graphic authentication codes as well as printed copies of graphic authentication codes, said copies belonging to a class of non-authentic graphic authentication codes and said originals belonging to a class of authentic graphic authentication codes,
- performing an alignment of images of the training set with the template using position synchronization marks of the graphic authentication code of the image and of the template,
- defining subunits of a secure graphic portion of the graphic authentication code, said subunits representing a portion of the overall surface area of said secure graphic image,
- applying an optimization process of the template using images from the training set, said optimization performed using said defined subunits,
- extracting features from the optimized template that enable discrimination between the class of authentic and non-authentic graphic authentication codes of the training set, the template optimization process and feature extraction process comprising iterative operations for optimization of the template and feature extraction.

FIG. 1

**FIG.2**

(4)

Original binary
square shape

(5)

Output of print and scan
channel: **offset printing**

(6)

Output of print and scan
channel: **laser printing**

(7)

Output of print and scan
channel: **HP Indigo
printing**

FIG. 4

(17)

(18)

(19)

FIG. 3

Pre-computed off-line
coordinates of synchronization
markers' representatives

(12)

(13)

(14)

$\hat{T}(.)$

(15)

(16)

Output image:
aligned SG secure
element

(9)

(11)

(8)

Query image:
SG relevant
data

(10)

Binarized markers

Coordinates of query
marker representatives

EP 3 242 239 A1

SG secure element
fragment

(20)

Synchronized fragment
of aligned SG secure
element

(21)

**FIG. 5**

(22)

(23)

(24)

FIG.6  **Block diagrams of matching query and template data using:**

*L1* or *L2* metric or cross-
correlation-based approach

Cross-bin distances

Query data
vector
(25)

Template data
vector
(26)

Query data
vector
(25)

Template data
vector
(26)

(a)

(b)

**Initialization:**

Optimal decomposition type and block size **ODT/OBS = ∅**
Optimal filter bank **OFB = ∅**
Optimal number of decomposition levels **ONDL = ∅**
Type of cross validation **TCV = TCV**
Optimal template frequencies **OTF = ∅**
Optimal template histogram **OTH = ∅**
Counters **h=1, i=1, j=1, k=1, l=1**
Probability of error **Pe = 1**
Parameters of decision maker **PDM = ∅**
Decomposition type set and block size set **(DTS/BSS)**,
Filter bank families set **(FBS)**
Set of numbers of decomposition levels **(SNDL)**
Set of numbers of histogram bins **(SNHB)**
Set of template frequencies **(STF)**
Type of cross validation **(TCV)**

(27)

TCV
(28)

TO FIG. 8

h=1 (29)

h=h+1

h≤ |STF| — No → TO FIG. 8
Yes ↓
TF = STF(h) (30)

i=1 (31)
i=i+1

i≤ |DTS/BSS| — No
Yes ↓
DT/BS = DTS/BSS(i) (32)

j=1 (33)
j=j+1

j≤ |WFS| — No
Yes ↓
FB = FBS(j) (34)

k=1 (35)
k=k+1

k≤ |NDLS| — No
Yes ↓
NDL = NDLS(k) (36)

l=1 (37)
l=l+1

l≤ |NHBS| — No
Yes ↓
NHB = SNHB(l) (38)

TF,DT/BS,WF NDL,NHB → TO FIG. 8

FROM FIG. 8 (49)

**FIG: 7**

From FIG. 7

(30)

Data of acquired SG

Labeling (40)

Positives          Negatives

(12) →  Data alignement  (41)

SG secure element (3)

TF

Template optimizer   (39)

From FIG. 7   From FIG. 7   From FIG. 7   From FIG. 7   From FIG. 7   To FIG. 7

TF   DT/BS (32)   FB (34)   NDL (36)   NHB (38)   TCV (28)   1   (49)

Block wise Filter Bank transform   (42)

(43)

Hash calculation

**Feature extraction**

EMD   (44)

EMD

Decision making   (45)

IB (46)
PDM (47)
Pe' (48)

(51)
From FIG. 7 (29) → Multiplier ←

ODT/OBS = DT/BS
OFB = FB, OND = ND
OTH = TH, OTF=TF
OPDM = PDM
Pe = Pe'
OIB = IB

Pe' < Pe

(50)

(52) | ODT/OBS,OWF,OND,OTH
OFT,ODM,OCIP,OIB,Pe → END

FIG: 8

EP 3 242 239 A1

34

EP 3 242 239 A1

Data of acquired SG

Alignment
reference
information
(12)

Data
alignement (41)

OTF ODT/OBS OWF ONDL ONHB OPDM

(52)

From FIG. 8

Block wise
Filter bank
transform

(43)

Hash
calculation

(44)

EMD

Feature
extraction

(45)

Decision
making

(42)

(53)

Original/Copy

FIG: 9

Product          Portable        **FIG. 10**
with SG          device                                                          Secure server  Database

                                        Authentication
                                        request

                              (1)
(54)             (55)                Confirmation/refuse of
                                   authenticity/re-acquisition request        (56)              (57)


                                          **FIG. 11**
Product          Portable
with SG          device                                                    Secure server  Database
                                        Authentication
                                        request

        (1)
        (54)          (55)             Confirmation/refuse of
                                          authenticity            (56)


**FIG. 12**   Product          Portable
              with SG          device

                              Confirmation/refuse of
                    tion      authenticity/re-acquisition report
          (1)
        (54)


                                                              Visual light channel (58)

Product     Portable
with SG     device                                            Infrared light channel (59)

                (1)
                                                              Ultraviolet light channel (60)
(54)        (55)

                                                              Channel physical properties of
                                                              the printing substance/substrate (61)


                              **FIG. 13**

**FIG. 14**

(58)

(59)

| Fusion (S) | Data Processing (S) | Feature Extraction (S) | Decision making (S) |
|---|---|---|---|
| (60) | (61) | (62) | (63) |

**FIG. 15**

(58) → Data Processing (V) (64)

(59) → Data Processing (I) (65)

| Fusion (DP) | Feature Extraction (DP) | Decision making (DP) |
|---|---|---|
| (66) | (67) | (68) |

**FIG. 16**

(58) → Data Processing (V) (64) → Feature Extraction (V) (69)

(59) → Data Processing (I) (65) → Feature Extraction (I) (70)

| Fusion (F) | Decision making |
|---|---|
| (71) | (72) |

**FIG. 17**

(58) → Data Processing (V) (64) → Feature Extraction (V) (69) → Decision making (V) (73)

(59) → Data Processing (I) (65) → Feature Extraction (I) (70) → Decision making (I) (74)

Fusion (D) (75)

Template          Image from
                  training set                    S2

S2c

S2b                                              S2a

Template                                    Sub-unit definition
optimization/filtering    Pre-processing

S4          Data
            transformation

S6          Feature
            calculations

S8          Feature extraction                Fig. 18

S10         Decision-making

Generated decision

Europäisches
Patentamt

European
Patent Office

Office européen
des brevets

# EUROPEAN SEARCH REPORT

Application Number

EP 16 16 7852

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/156733 A1 (ZELLER CLAUDE [US] ET AL) 21 August 2003 (2003-08-21)<br>* figure 1; table 1 *<br>* paragraphs [0010], [0011], [0026] *<br>* paragraphs [0031], [0033], [0035] *<br>* paragraphs [0039], [0095], [0096] *<br>* paragraphs [0097], [0098], [0103] *<br>* paragraphs [0117], [0142], [0198] *<br>----- | 1-15 | INV.<br>G06F21/36<br>G06Q20/32<br>G06K9/00<br>G06K9/46<br>G06T7/00<br>G06K9/62 |
| X<br>A | US 2004/247169 A1 (ROSS GARY A [GB] ET AL) 9 December 2004 (2004-12-09)<br>* paragraphs [0050], [0051], [0053] *<br>* paragraphs [0065], [0087], [0088] *<br>* figure 1 *<br>----- | 1,15<br>2-14 | |
| A | US 2011/096955 A1 (VOLOSHYNOVSKIY SVIATOSLAV [CH] ET AL) 28 April 2011 (2011-04-28)<br>* paragraphs [0039], [0041], [0042] *<br>* paragraphs [0046], [0048], [0058] *<br>* figures 4, 9 *<br>----- | 1-15 | |
| A | EP 2 921 989 A1 (UNIVERSITÉ DE GENÈVE [CH]) 23 September 2015 (2015-09-23)<br>* paragraphs [0048], [0115], [0205] *<br>----- | 1-15 | TECHNICAL FIELDS SEARCHED (IPC)<br>G06F<br>G06Q<br>G06K<br>G06T |
| A | US 2016/012308 A1 (BONCYK WAYNE C [US] ET AL) 14 January 2016 (2016-01-14)<br>* paragraphs [0021], [0027], [0028] *<br>* paragraphs [0030], [0031], [0032] *<br>* figures 2,4 *<br>-----<br>-/-- | 1-15 | |

The present search report has been drawn up for all claims

| Place of search | Date of completion of the search | Examiner |
|---|---|---|
| Munich | 26 October 2016 | Madzharova, Violeta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 16 16 7852

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI PEIHUA ET AL: "A Novel Earth Mover's Distance Methodology for Image Matching with Gaussian Mixture Models", 2013 IEEE INTERNATIONAL CONFERENCE ON COMPUTER VISION, IEEE, 1 December 2013 (2013-12-01), pages 1689-1696, XP032572856, ISSN: 1550-5499, DOI: 10.1109/ICCV.2013.212 [retrieved on 2014-02-28] * Sections 2.1, 2.3 *<br>----- | 1-15 | |

TECHNICAL FIELDS
SEARCHED     (IPC)

The present search report has been drawn up for all claims

| Place of search | Date of completion of the search | Examiner |
|---|---|---|
| Munich | 26 October 2016 | Madzharova, Violeta |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.
EP 16 16 7852

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2016

| Patent document cited in search report | Publication date | Patent family member(s) | | Publication date |
|---|---|---|---|---|
| US 2003156733 A1 | 21-08-2003 | AU | 2003213094 A1 | 09-09-2003 |
| | | EP | 1485863 A2 | 15-12-2004 |
| | | US | 2003156733 A1 | 21-08-2003 |
| | | WO | 03071481 A2 | 28-08-2003 |
| US 2004247169 A1 | 09-12-2004 | EP | 1484719 A2 | 08-12-2004 |
| | | US | 2004247169 A1 | 09-12-2004 |
| US 2011096955 A1 | 28-04-2011 | CN | 102037676 A | 27-04-2011 |
| | | EP | 2257909 A2 | 08-12-2010 |
| | | US | 2011096955 A1 | 28-04-2011 |
| | | WO | 2009115611 A2 | 24-09-2009 |
| EP 2921989 A1 | 23-09-2015 | EP | 2921989 A1 | 23-09-2015 |
| | | WO | 2015139848 A1 | 24-09-2015 |
| US 2016012308 A1 | 14-01-2016 | US | 2011211760 A1 | 01-09-2011 |
| | | US | 2011228126 A1 | 22-09-2011 |
| | | US | 2011255744 A1 | 20-10-2011 |
| | | US | 2011258057 A1 | 20-10-2011 |
| | | US | 2011317873 A1 | 29-12-2011 |
| | | US | 2012002872 A1 | 05-01-2012 |
| | | US | 2012163667 A1 | 28-06-2012 |
| | | US | 2012163722 A1 | 28-06-2012 |
| | | US | 2012207352 A1 | 16-08-2012 |
| | | US | 2012250942 A1 | 04-10-2012 |
| | | US | 2012263351 A1 | 18-10-2012 |
| | | US | 2012269396 A1 | 25-10-2012 |
| | | US | 2012294488 A1 | 22-11-2012 |
| | | US | 2012296754 A1 | 22-11-2012 |
| | | US | 2013030961 A1 | 31-01-2013 |
| | | US | 2013097043 A1 | 18-04-2013 |
| | | US | 2013121532 A1 | 16-05-2013 |
| | | US | 2013170702 A1 | 04-07-2013 |
| | | US | 2013229536 A1 | 05-09-2013 |
| | | US | 2013232076 A1 | 05-09-2013 |
| | | US | 2013238412 A1 | 12-09-2013 |
| | | US | 2013265400 A1 | 10-10-2013 |
| | | US | 2013265435 A1 | 10-10-2013 |
| | | US | 2013266183 A1 | 10-10-2013 |
| | | US | 2013268407 A1 | 10-10-2013 |
| | | US | 2013274013 A1 | 17-10-2013 |
| | | US | 2013276004 A1 | 17-10-2013 |
| | | US | 2013279754 A1 | 24-10-2013 |
| | | US | 2013311503 A1 | 21-11-2013 |
| | | US | 2013316800 A1 | 28-11-2013 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 16 16 7852

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2016

| Patent document cited in search report | Publication date | Patent family member(s) | Publication date |
|---|---|---|---|
| | | US 2014003668 A1 | 02-01-2014 |
| | | US 2014023234 A1 | 23-01-2014 |
| | | US 2014032330 A1 | 30-01-2014 |
| | | US 2014043500 A1 | 13-02-2014 |
| | | US 2014059580 A1 | 27-02-2014 |
| | | US 2014081747 A1 | 20-03-2014 |
| | | US 2014098993 A1 | 10-04-2014 |
| | | US 2014101690 A1 | 10-04-2014 |
| | | US 2014147053 A1 | 29-05-2014 |
| | | US 2014149154 A1 | 29-05-2014 |
| | | US 2014152855 A1 | 05-06-2014 |
| | | US 2014177920 A1 | 26-06-2014 |
| | | US 2014177921 A1 | 26-06-2014 |
| | | US 2014211996 A1 | 31-07-2014 |
| | | US 2014229306 A1 | 14-08-2014 |
| | | US 2014331184 A1 | 06-11-2014 |
| | | US 2014340532 A1 | 20-11-2014 |
| | | US 2014355894 A1 | 04-12-2014 |
| | | US 2014361075 A1 | 11-12-2014 |
| | | US 2014363092 A1 | 11-12-2014 |
| | | US 2014368674 A1 | 18-12-2014 |
| | | US 2015003747 A1 | 01-01-2015 |
| | | US 2015063644 A1 | 05-03-2015 |
| | | US 2015063645 A1 | 05-03-2015 |
| | | US 2015063712 A1 | 05-03-2015 |
| | | US 2015066936 A1 | 05-03-2015 |
| | | US 2015199384 A1 | 16-07-2015 |
| | | US 2015254279 A1 | 10-09-2015 |
| | | US 2015302266 A1 | 22-10-2015 |
| | | US 2015302267 A1 | 22-10-2015 |
| | | US 2015302271 A1 | 22-10-2015 |
| | | US 2015302385 A1 | 22-10-2015 |
| | | US 2016012308 A1 | 14-01-2016 |

EPO FORM P0459

For more details about this annex : see Official Journal of the European Patent Office, No. 12/82

## REFERENCES CITED IN THE DESCRIPTION

### Patent documents cited in the description

- WO 2015067725 A
- US 20110259962 A1
- US 6454174 B
- US 20130200144 A1
- WO 2015134354 A1
- US 7735988 B2
- US 20080002882 A1
- US 20030070075 A1

### Non-patent literature cited in the description

- **A. MARKMAN ; B. JAVIDI ; M. TEHRANIPOOR.** Photon-counting security tagging and verification using optically encoded QR codes. *IEEE Photon. J.,* 2013, vol. 6, 6800609
- **A.T. PHAN HO ; B.A. HOANG MAI ; W. SAWAYA ; P. BAS.** Authentification par codes graphiques: optimisation du canal d'impression-acquisition. *GRES-TI,* September 2015, 4
- **T. KALKER ; J. P. LINNARTZ ; M. VAN DIJK.** Watermark estimation through detector analysis. *Proc. ICIP,* 1998, vol. 1, 425-429
- **C. BARAS ; F. CAYRE.** 2D Bar-Codes for Authentication: A Security Approach. *Proc. EUSIPCO,* August 2012, vol. 12
- **O. KOVAL ; S. VOLOSHYNOVSKIY ; F. FARHAD-ZADEH.** Identification In Desynchronization Channels. *Proc. IEEE ITW,* 2011
- **T.M. COVER ; J.A. THOMAS.** Elements of information theory. Wiley-Interscience, 1991
- **L. KANTOROVITCH.** *On the translocation of masses, MS,* 1958
- **Y. RUBNER ; C. TOMASI ; L.J. GUIBAS.** The earth mover's distance as a metric for image retrieval. *International J. of Comp. Vision,* 2000, vol. 40 (2
- **M.E. MORTENSON.** Geometric Transformations. Industrial Press Inc, 1995
- **G. LINDGREN.** Stationary Stochastic Processes: Theory and Applications. Chapman and Hall/CRC, 2012
- **K.-H. THUNG ; P. RAVEENDRAN.** A survey of image quality measures. *Proc. of TECHPOS,* 2009, 1-4
- **H.H. BAUSCHKE ; J.M. BORWEIN.** On projection algorithms for solving convex feasibility problems. *SIAM Review,* 1996, vol. 38 (3), 367-426
- **D.A. FORSYTH ; J. PONCE.** Computer Vision, a modern approach. Prentice Hall, 2003
- **S. LOPRESTO ; K. RAMCHANDRAN ; M. OR-CHARD.** Image Coding based on Mixture Modeling of Wavelet Coefficients and a fast Estimation-Quantization Framework. *Proc. of the DCC,* 1997
- **S. MALLAT.** A theory for multiresolution signal decomposition: the wavelet representation. *IEEE Trans. on Pattern Recogn. and Machine Intel.,* 1989, vol. 11 (7), 674-693
- **R. R. COIFMAN ; D. L. DONOHO.** Translation invariant denoising,'' in Wavelets and Statistics. *Springer Lecture Notes in Statistics,* 1995, vol. 103, 125-150
- **R.R. COIFMAN ; M.V. WICKERHAUSER.** Entropy-Based Algorithms for Best Basis Selection. *IEEE Trans. on Information Theory,* vol. 38 (2), 1992
- **E. J. CANDES ; L. DEMANET ; CURVELETS ; FOURIER.** *Integral Operators,* 2002
- Beamlets and Multiscale Image Analysis. **D.L. DONOHO ; X. HUO ; I. JERMYN ; P. JONES ; G. LERMAN ; O. LEVI ; F. NATTERER.** Multiscale and Multiresolution Methods. Springer, 2001, 149-196
- Ridgelets and their derivatives: Representation of images with edges. **E. J. CANDÈS et al.** Curves and Surfaces. 1999
- **A. KARASARIDIS ; E. SIMONCELLI.** A Filter Design Technique for Steerable Pyramid Image Transforms. *Proc. of ICASSP,* May 1996
- **R. E. BLAHUT.** Algebraic Codes for Data Transmission. University Press, 2011
- **X. LIU ; S.C. DRAPER ; B. RECHT.** *Allerton Conference,* 2012, vol. The L1 penalized decoder and its reweighted LP, 1572-1579
- **B.K. GUNTURK ; XIN LI.** Image Restoration: Fundamentals and Advances. CRC Press, 2012
- **V. AGARWAL ; A.V. GRIBOK ; M.A. ABIDI.** Image restoration using L1 norm penalty function. *Inverse Problems in Science and Engineering,* 2007, vol. 15 (8), 785-809
- **H. ZOU ; T. HASTIE.** Regularization and Variable Selection via the Elastic Net. *J. of the Royal Statistical Society,* 2005, 301-320

- **A. D'ANGELO.** Characterization and quality evaluation of geometric distortions in images with application to digital watermarking, PhD dissertation. University of Siena, 2009
- PhD dissertation. **O. PELE.** Distance Functions: Theory, Algorithms and Applications. Hebrew University, 2011
- Combining SVMs with various feature selection strategies. **Y.-W. CHEN ; C.-J. LIN.** Feature extraction, foundations and applications. Springer, 2006
- **NICK EFFORD.** Digital Image Processing: A Practical Introduction Using Java. Pearson Education, 2000
- Pattern Recognition and Machine Learning. **C. BISHOP.** Information Science and Statistics. Springer-Verlag New York, Inc, 2006
- Sensor fusion for synthetic vision. **M. PAVEL ; J. LARIMER ; A. AHUMADA.** Proc. of the Society for Information Display,. SPIE, 1992, 475-478
- **A. TOET.** Hierarchical image fusion. *Machine Vision and Applications,* 1990, vol. 3, 1-11
- **R. SHARMA ; T. LEEN ; M. PAVEL.** Probabilistic Image Sensor Fusion. *Advances in Neural Information Processing Systems,* 1999, vol. 11, 824-830
- **D. KRIEGMAN ; T.E. BINFORD ; T.O. BINFORD.** Stereo vision and navigation in buildings for mobile robots. *IEEE Trans. Robot. Automat.,* 1989, vol. 5 (6), 792-803
- **P. AJJIMARANGSEE.** Neural network model for fusion of visible and infrared sensor outputs. *Proceedings of SPIE - The International Society for Optical Engineer- ing,* 1988, 153-160
- **J.S.J. LEE.** Multiple sensor fusion based on morphological processing. *Proc. of SPIE - The International Society for Optical Engineering,* 1988, 94-100
- **J. LANDA ; K. SCHEFF.** Binocular fusion using simulated annealing. *Proc. IEEE 1st Int. Conf. Neural Networks,* 1987, 327-334
- **Y. FREUND ; R. SCHAPIRE.** A Short Introduction to Boosting. *Journal of Japanese Society for Artificial Intelligence,* 1999, vol. 14 (5), 771-780
- **L. BREIMAN.** Bagging predictors. *Machine Learning,* 1996, vol. 24 (2), 123-140
- **L. ALEXANDRE ; A. CAMPIHLO ; M. KAMEL.** On combining classifiers using sum and product rules. *Pattern Recognition Letters,* 2001, vol. 22, 1283-1289
- **N. UEDA.** Optimal linear combination of neural networks for improving classification performance. *IEEE Trans. Pattern Anal. Mach. Intell.,* 2000, vol. 22 (2), 207-215
- **M. VAN ERP ; L. G. VUURPIJL ; L. SCHOMAKER.** An Overview and Comparison of Voting Methods for Pattern Recognition. *Proc. of IWFHR-8,* 2002, 195-200
- **GLENN SHAFER.** A Mathematical Theory of Evidence. Princeton University Press, 1976
- **A. P. DEMPSTER.** A Generalization of Bayesian Inference. *Journal of the Royal Statistical Society,* 1968, vol. 30, 205-247
- **Y. HUANG ; C. SUEN.** A Method of Combining Multiple Experts for Recognition of Unconstrained Handwritten Numerals. *IEEE Trans. on Pattern Analysis and Machine Intel.,* 1995, vol. 17 (1), 90-94
- Multiple classifier combination methodologies for different output levels. **C.Y.SUEN ; L.LAM.** Lecture Notes in Computer Science. Springer-Verlag Pub, 2000, vol. 1857, 52-66